# EUROPEAN PATENT APPLICATION

(11) **EP 4 598 217 A1**
(43) Date of publication of application: **06.08.2025**
(21) Application number: 23873189.7
(22) Date of filing: 27.09.2023
(51) Int. Cl.: H04W 72/23, H04W 72/04, H04L 5/00, H04L 5/14

(54) **METHOD FOR PERFORMING COMMUNICATION IN WIRELESS COMMUNICATION SYSTEM AND DEVICE THEREFOR**

(30) Priority: 29.09.2022 KR 20220124739
(71) Applicant: LG Electronics Inc., Yeongdeungpo-gu Seoul 07336 (KR)
(72) Inventor: SONG, Minwoo, Seoul 06772 (KR); YOU, Hyangsun, Seoul 06772 (KR); KO, Hyunsoo, Seoul 06772 (KR); KIM, Seonwook, Seoul 06772 (KR); SHIM, Jaenam, Seoul 06772 (KR)
(74) Representative: Frenkel, Matthias Alexander
(86) International application number: PCT/KR2023/014991
(87) International publication number: WO 2024/072078

(57) **Abstract**

Disclosed are a method for a terminal to transmit an uplink signal in a wireless communication system and a device therefor according to various embodiments. Disclosed are a method and a device therefor, the method comprising the steps of: receiving time division duplexing (TDD) configuration information for configuring a downlink time interval and an uplink time interval in a time resource period; receiving first indication information which specifies a first time interval related to a full-duplex operation of a base station during the time resource period; receiving second indication information which specifies a second time interval among the first time interval; and communicating with the base station on the basis of the TDD configuration information, the first indication information, and the second indication information. The second time interval is a time interval in the first time interval, which can be changed to a time interval related to a half-duplex operation of the base station.

## Description

### TECHNICAL FIELD

The present disclosure relates to a method of performing communication by a user equipment (UE) based on a time interval during which a full-duplex operation of a base station (BS) is performed in a wireless communication system, and to a device therefor.

### BACKGROUND

Wireless communication systems have been widely deployed to provide various types of communication services such as voice or data. In general, a wireless communication system is a multiple access system that supports communication of multiple users by sharing available system resources (a bandwidth, transmission power, etc.). Examples of multiple access systems include a code division multiple access (CDMA) system, a frequency division multiple access (FDMA) system, a time division multiple access (TDMA) system, an orthogonal frequency division multiple access (OFDMA) system, a single carrier frequency division multiple access (SC-FDMA) system, and a multi carrier frequency division multiple access (MC-FDMA) system.

As more and more communication devices require larger communication capacities in transmitting and receiving signals, there is a need for mobile broadband communication improved from the legacy radio access technology. Accordingly, communication systems considering services/UEs sensitive to reliability and latency are under discussion. A next-generation radio access technology in consideration of enhanced mobile broadband communication, massive Machine Type Communication (MTC), and Ultra-Reliable and Low Latency Communication (URLLC) may be referred to as new radio access technology (RAT) or new radio (NR).

### DISCLOSURE

### Technical Problem

One object of the present disclosure is to provide a method and device for dynamically changing and designating the second time interval into a time interval for performing the half-duplex operation of the BS through downlink (DL) control information by separately pre-designating a second time interval, which may be changed from a first time interval designated as a time interval in which the full duplex operation of the BS is performed, to a time interval for performing the half-duplex operation of the BS.

It will be appreciated by those of ordinary skill in the art to which the embodiment(s) pertain that the objects that could be achieved with the embodiment(s) are not limited to what has been particularly described hereinabove and the above and other objects will be more clearly understood from the following detailed description.

### Technical Solution

According to an aspect, a method of performing communication with a base station (BS) by a user equipment (UE) in a wireless communication system includes receiving time division duplexing (TDD) configuration information for configuring a downlink (DL) time interval and an uplink (UL) time interval within a time resource period, receiving first indication information specifying a first time interval related to a full-duplex operation of the BS in the time resource period, receiving second indication information specifying a second time interval in the first time interval, and performing communication with the BS based on the TDD configuration information, the first indication information, and the second indication information, wherein the second time interval is a time interval changeable in a time interval related to a half-duplex operation of the BS in the first time interval.

The second time interval is changed from a time interval related to a full-duplex operation of the BS to a time interval related to a half-duplex operation of the BS based on reception of downlink control information (DCI).

A remaining time interval excluding the second time interval from the first time interval is a time interval fixed as a time interval for a full-duplex operation of the BS regardless of reception of the DCI.

The first time interval is specified within the time resource period based on information of a start time resource and information of a last time resource, which are provided in the first indication information.

The first time interval is specified within the time resource period based on information of a start time resource and duration information, which are provided in the first indication information.

The first time interval is specified only within the DL time interval based on the first indication information.

A frequency band for the first time interval includes a first subband for the UL and a second subband for the DL that do not overlap each other.

A frequency band for the first time interval includes a first subband for the UL and a second subband for the DL that overlap each other.

The time resource period may be divided into the first time interval and a third time interval excluding the first time interval based on the first indication information, and the first time interval may be configured with a different transmission power control parameter than the third time interval.

According to another aspect, a user equipment (UE) for performing communication with a base station (BS) in a wireless communication system includes a radio frequency (RF) transceiver, and a processor connected to the RF transceiver, wherein the processor is configured to control the RF transceiver to receive time division duplexing (TDD) configuration information for configuring a downlink (DL) time interval and an uplink (UL) time interval within a time resource period, receive first indication information specifying a first time interval related to a full-duplex operation of the BS in the time resource period, receive second indication information specifying a second time interval in the first time interval, and perform communication with the BS based on the TDD configuration information, the first indication information, and the second indication information, and the second time interval is a time interval changeable in a time interval related to a half-duplex operation of the BS in the first time interval.

According to another aspect, a processing device for controlling a user equipment (UE) performing communication with a base station (BS) in a wireless communication system includes at least one processor, and at least one memory connected to the at least one processor and storing instructions to cause the UE, based on being executed by the at least one processor, to receive time division duplexing (TDD) configuration information for configuring a downlink (DL) time interval and an uplink (UL) time interval within a time resource period, receive first indication information specifying a first time interval related to a full-duplex operation of the BS in the time resource period, receive second indication information specifying a second time interval in the first time interval, and perform communication with the BS based on the TDD configuration information, the first indication information, and the second indication information, wherein the second time interval is a time interval changeable in a time interval related to a half-duplex operation of the BS in the first time interval.

According to another aspect, a method of performing communication with a user equipment (UE) by a base station (BS) in a wireless communication system includes transmitting, to the UE, time division duplexing (TDD) configuration information for configuring a downlink (DL) time interval and an uplink (UL) time interval within a time resource period, transmitting, to the UE, first indication information specifying a first time interval related to a full-duplex operation of the BS in the time resource period, transmitting, to the UE, second indication information specifying a second time interval in the first time interval, and performing communication with the UE based on the TDD configuration information, the first indication information, and the second indication information, wherein the second time interval is a time interval changeable in a time interval related to a half-duplex operation of the BS in the first time interval.

### Advantageous Effects

Various embodiments may effectively indicate to a user equipment (UE) a first time interval during which a full duplex operation of a base station (BS) is performed in a time resource period based on a TDD configuration, through first indication information about the first time interval during which the channel environment may be different in the time resource periods.

A second time interval may be dynamically changed to a time interval for performing a half-duplex operation of a BS through downlink (DL) control information, and the size of the DL control information may be minimized by separately and previously indicating a second time interval that is to be changed in the first time interval to a time interval for performing a half-duplex operation of the BS.

When the BS is highly concerned about interference due to a performance interval of the full-duplex operation in relation to adjacent BSs or the like, the second time interval may be rapidly and dynamically changed to the performance interval of the half-duplex operation of the BS, thereby effectively controlling interference that may occur due to the full-duplex operation time interval.

Effects to be achieved by embodiment(s) are not limited to what has been particularly described hereinabove and other effects not mentioned herein will be more clearly understood by persons skilled in the art to which embodiment(s) pertain from the following detailed description.

### BRIEF DESCRIPTION OF THE DRAWINGS

The accompanying drawings, which are included to provide a further understanding of the disclosure and are incorporated in and constitute a part of this application, illustrate embodiments of the disclosure and together with the description serve to explain the principle of the disclosure.
FIG. 1 illustrates the structure of an LTE system to which embodiment(s) are applicable.
FIG. 2 illustrates the structure of an NR system to which embodiment(s) are applicable.
FIG. 3 illustrates the structure of an NR radio frame to which embodiment(s) are applicable.
FIG. 4 illustrates the slot structure of an NR frame to which embodiment(s) are applicable.
FIG. 5 is a diagram illustrating physical channels and a signal transmission method using the physical channels, which may be used in the embodiment;
FIG. 6 illustrates a process in which a UE transmits ACK/NACK via PUSCH.
FIG. 7 illustrates an example of a CSI-related procedure.
FIG. 8 is a diagram for explaining a method of performing a full duplex operation in an NR system.
FIG. 9 and FIG. 10 are diagrams for explaining sub-band full duplex (SBFD) and single frequency full duplex (SFFD) operations.
FIG. 11 is a diagram for explaining a method of determining an SBFD time interval within a time resource period based on a TDD configuration.
FIG. 12 is a diagram for explaining a method of indicating an SBFD time interval based on the DL symbol.
FIG. 13 is a diagram for explaining a method of configuring an SBFD time interval within a flexible time interval.
FIG. 14 is a diagram for explaining a method of additionally indicating Hard and Soft intervals for an SBFD time interval.
FIG. 15 is a diagram for explaining a method for a UE to configure/receive a first time interval in which a full-duplex operation of a BS is performed in a time resource period according to a TDD configuration.
FIG. 16 is a diagram for explaining a method for a BS to configure/receive a first time interval in which a full-duplex operation of a BS is performed in a time resource period according to a TDD configuration.
FIG. 17 illustrates a communication system applied to the present disclosure.
FIG. 18 illustrates wireless devices applicable to the present disclosure.
FIG. 19 illustrates another example of a wireless device to which the present disclosure is applied.

### DETAILED DESCRIPTION

A wireless communication system is a multiple access system that supports communication with multiple users by sharing available system resources (e.g., bandwidth, transmission power, etc.). Examples of multiple access systems include a CDMA (code division multiple access) system, an FDMA (frequency division multiple access) system, a TDMA (time division multiple access) system, an OFDMA (orthogonal frequency division multiple access) system, a SC-FDMA (single carrier frequency division multiple access) system, and an MC-FDMA (multi carrier frequency division multiple access) system.

A sidelink refers to a communication scheme in which a direct link is established between user equipments (UEs) to directly exchange voice or data between UEs without assistance from a base station (BS). The sidelink is being considered as one way to address the burden on the BS caused by rapidly increasing data traffic.

Vehicle-to-everything (V2X) refers to a communication technology for exchanging information with other vehicles, pedestrians, and infrastructure-built objects through wired/wireless communication. V2X may be divided into four types: vehicle-to-vehicle (V2V), vehicle-to-infrastructure (V2I), vehicle-to-network (V2N), and vehicle-to-pedestrian (V2P). V2X communication may be provided through a PC5 interface and/or a Uu interface.

As more and more communication devices require larger communication capacities in transmitting and receiving signals, there is a need for mobile broadband communication improved from the legacy radio access technology. Accordingly, communication systems considering services/UEs sensitive to reliability and latency are under discussion. A next-generation radio access technology in consideration of enhanced mobile broadband communication, massive MTC, and Ultra-Reliable and Low Latency Communication (URLLC) may be referred to as new radio access technology (RAT) or new radio (NR). Even in NR, V2X communication may be supported.

Techniques described herein may be used in various wireless access systems such as code division multiple access (CDMA), frequency division multiple access (FDMA), time division multiple access (TDMA), orthogonal frequency division multiple access (OFDMA), single carrier-frequency division multiple access (SC-FDMA), etc. CDMA may be implemented as a radio technology such as universal terrestrial radio access (UTRA) or CDMA2000. TDMA may be implemented as a radio technology such as global system for mobile communications (GSM)/general packet radio service (GPRS)/Enhanced Data Rates for GSM Evolution (EDGE). OFDMA may be implemented as a radio technology such as IEEE 802.11 (Wi-Fi), IEEE 802.16 (WiMAX), IEEE 802.20, evolved-UTRA (E-UTRA) etc. UTRA is a part of universal mobile telecommunications system (UMTS). 3GPP LTE is a part of Evolved UMTS (E-UMTS) using E-UTRA. 3GPP LTE employs OFDMA for downlink and SC-FDMA for uplink. LTE-A is an evolution of 3GPP LTE.

5G NR is a successor technology of LTE-A, and is a new clean-slate mobile communication system with characteristics such as high performance, low latency, and high availability. 5G NR may utilize all available spectrum resources, from low frequency bands below 1 GHz to intermediate frequency bands from 1 GHz to 10 GHz and high frequency (millimeter wave) bands above 24 GHz.

For clarity of explanation, LTE-A or 5G NR is mainly described, but the technical spirit of the embodiment(s) is not limited thereto.

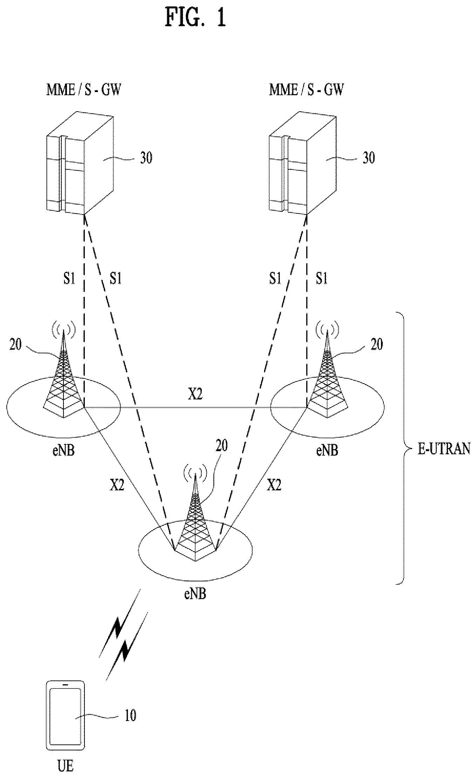

FIG. 1 illustrates the structure of an LTE system to which the present disclosure is applicable. This may also be called an evolved UMTS terrestrial radio access network (E-UTRAN) or LTE/LTE-A system.

Referring to FIG. 1, the E-UTRAN includes evolved Node Bs (eNBs) 20 which provide a control plane and a user plane to UEs 10. A UE 10 may be fixed or mobile, and may also be referred to as a mobile station (MS), user terminal (UT), subscriber station (SS), mobile terminal (MT), or wireless device. An eNB 20 is a fixed station communication with the UE 10 and may also be referred to as a base station (BS), a base transceiver system (BTS), or an access point.

eNBs 20 may be connected to each other via an X2 interface. An eNB 20 is connected to an evolved packet core (EPC) 39 via an S1 interface. More specifically, the eNB 20 is connected to a mobility management entity (MME) via an S1-MME interface and to a serving gateway (S-GW) via an S1-U interface.

The EPC 30 includes an MME, an S-GW, and a packet data network-gateway (P-GW). The MME has access information or capability information about UEs, which are mainly used for mobility management of the UEs. The S-GW is a gateway having the E-UTRAN as an end point, and the P-GW is a gateway having a packet data network (PDN) as an end point.

Based on the lowest three layers of the open system interconnection (OSI) reference model known in communication systems, the radio protocol stack between a UE and a network may be divided into Layer 1 (L1), Layer 2 (L2) and Layer 3 (L3). These layers are defined in pairs between a UE and an Evolved UTRAN (E-UTRAN), for data transmission via the Uu interface. The physical (PHY) layer at L1 provides an information transfer service on physical channels. The radio resource control (RRC) layer at L3 functions to control radio resources between the UE and the network. For this purpose, the RRC layer exchanges RRC messages between the UE and an eNB.

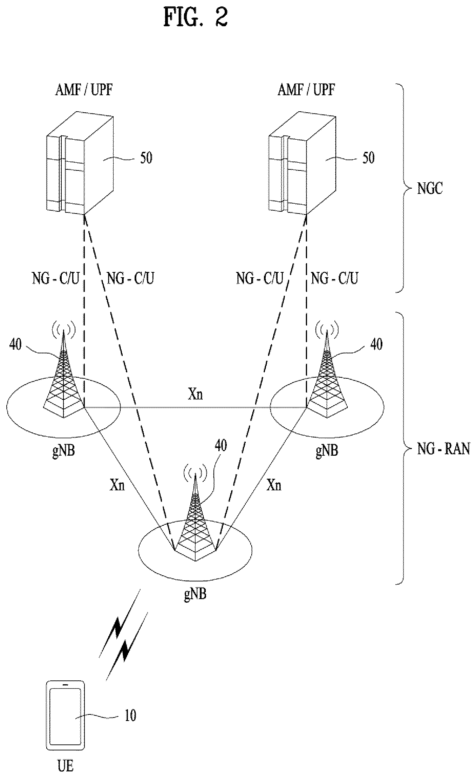

FIG. 2 illustrates the structure of a NR system.

Referring to FIG. 2, a next generation radio access network (NG-RAN) may include a next generation Node B (gNB) and/or an eNB, which provides user-plane and control-plane protocol termination to a UE. In FIG. 2, the NG-RAN is shown as including only gNBs, by way of example. A gNB and an eNB are connected to each other via an Xn interface. The gNB and the eNB are connected to a 5G core network (5GC) via an NG interface. More specifically, the gNB and the eNB are connected to an access and mobility management function (AMF) via an NG-C interface and to a user plane function (UPF) via an NG-U interface.

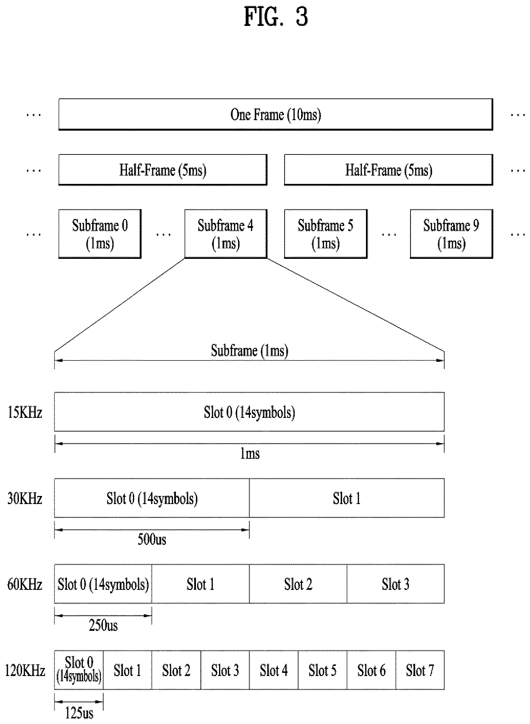

FIG. 3 illustrates the structure of a NR radio frame to which the present disclosure is applicable.

Referring to FIG. 3, a radio frame may be used for UL transmission and DL transmission in NR. A radio frame is 10 ms in length, and may be defined by two 5-ms half-frames. An HF may include five 1-ms subframes. A subframe may be divided into one or more slots, and the number of slots in an SF may be determined according to a subcarrier spacing (SCS). Each slot may include 12 or 14 OFDM(A) symbols according to a cyclic prefix (CP).

In a normal CP (NCP) case, each slot may include 14 symbols, whereas in an extended CP (ECP) case, each slot may include 12 symbols. Herein, a symbol may be an OFDM symbol (or CP-OFDM symbol) or an SC-FDMA symbol (or DFT-s-OFDM symbol).

Table 1 below lists the number of symbols per slot Nslotsymb, the number of slots per frame N^{frame,u}ₛₗₒₜ, and the number of slots per subframe N^{subframe,u}ₛₗₒₜ according to an SCS configuration µ in the NCP case.

**[Table 1]**

| SCS (15*2^{u}) | N^{slot} _{symb} | N^{frame,u}slot | N^{subframe,u}ₛₗₒₜ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |

Table 2 below lists the number of symbols per slot, the number of slots per frame, and the number of slots per subframe according to an SCS in the ECP case.

**[Table 2]**

| SCS (15*2^{u}) | N^{slot}_{symb} | N^{frame,u}ₛₗₒₜ | N^{subframe,u}ₛₗₒₜ |
|---|---|---|---|
| 60KHz (u=2) | 12 | 40 | 4 |

In the NR system, different OFDM(A) numerologies (e.g., SCSs, CP lengths, etc.) may be configured for a plurality of cells aggregated for one UE. Thus, the (absolute) duration of a time resource (e.g., SF, slot, or TTI) including the same number of symbols may differ between the aggregated cells (such a time resource is commonly referred to as a time unit (TU) for convenience of description). In NR, multiple numerologies or SCSs to support various 5G services may be supported. For example, a wide area in conventional cellular bands may be supported when the SCS is 15 kHz, and a dense urban environment, lower latency, and a wider carrier bandwidth may be supported when the SCS is 30 kHz/60 kHz. When the SCS is 60 kHz or higher, a bandwidth wider than 24.25 GHz may be supported to overcome phase noise.

The NR frequency band may be defined as two types of frequency ranges. The two types of frequency ranges may be FR1 and FR2. The numerical values of the frequency ranges may be changed. For example, the two types of frequency ranges may be configured as shown in Table 3 below. Among the frequency ranges used in the NR system, FR1 may represent "sub 6 GHz range" and FR2 may represent "above 6 GHz range" and may be called millimeter wave (mmW).

**[Table 3]**

| Frequency Range designation | Corresponding frequency range | Subcarrier Spacing (SCS) |
|---|---|---|
| FR1 | 450MHz - 6000MHz | 15, 30, 60kHz |
| FR2 | 24250MHz - 52600MHz | 60, 120, 240kHz |

As mentioned above, the numerical values of the frequency ranges of the NR system may be changed. For example, FR1 may include a band of 410 MHz to 7125 MHz as shown in Table 4 below. That is, FR1 may include a frequency band of 6 GHz (or 5850 MHz, 5900 MHz, 5925 MHz, etc.) or higher. For example, the frequency band of 6 GHz (or 5850 MHz, 5900 MHz, 5925 MHz, etc.) or higher included in FR1 may include an unlicensed band. The unlicensed band may be used for various purposes, for example, for communication for vehicles (e.g., autonomous driving).

**[Table 4]**

| Frequency Range designation | Corresponding frequency range | Subcarrier Spacing (SCS) |
|---|---|---|
| FR1 | 410MHz - 7125MHz | 15, 30, 60kHz |
| FR2 | 24250MHz - 52600MHz | 60, 120, 240kHz |

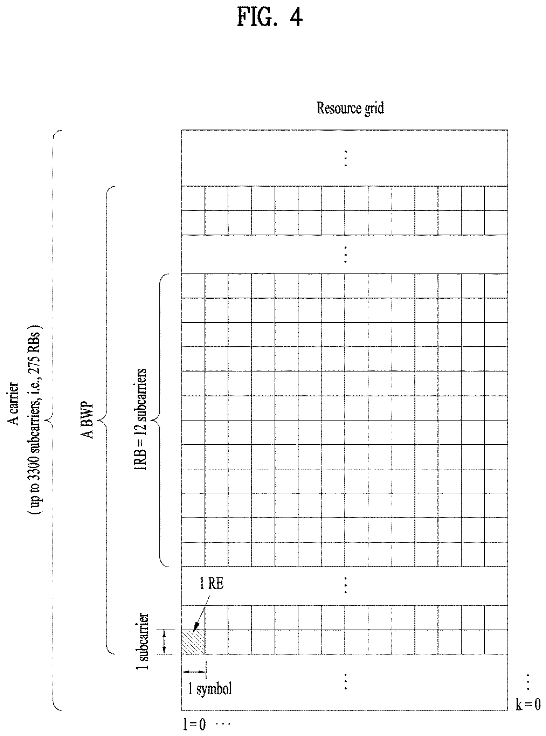

FIG. 4 illustrates the slot structure of a NR frame.

Referring to FIG. 4, one slot includes a plurality of symbols in the time domain. For example, one slot may include 14 symbols in a normal CP and 12 symbols in an extended CP. Alternatively, one slot may include 7 symbols in the normal CP and 6 symbols in the extended CP.

A carrier may include a plurality of subcarriers in the frequency domain. A resource block (RB) is defined as a plurality of consecutive subcarriers (e.g., 12 subcarriers) in the frequency domain. A bandwidth part (BWP) may be defined as a plurality of consecutive (P)RBs in the frequency domain, and the BWP may correspond to one numerology (e.g., SCS, CP length, etc.). The carrier may include up to N (e.g., 5) BWPs. Data communication may be conducted in an activated BWP. In a resource grid, each element may be referred to as a resource element (RE) and may be mapped to one complex symbol.

The wireless interface between UEs or the wireless interface between a UE and a network may be composed of an L1 layer, an L2 layer, and an L3 layer. In various embodiments of the present disclosure, the L1 layer may represent a physical layer. The L2 layer may represent, for example, at least one of a MAC layer, an RLC layer, a PDCP layer, and an SDAP layer. The L3 layer may represent, for example, an RRC layer.

### Bandwidth part (BWP)

In the NR system, up to 400 MHz may be supported per component carrier (CC). If a UE operating on a wideband CC always operates with the RF for the entire CCs turned on, the battery consumption of the UE may be increased. Alternatively, considering various use cases (e.g., eMBB, URLLC, Mmtc, V2X, etc.) operating within one wideband CC, different numerologies (e.g., sub-carrier spacings) may be supported for different frequency bands within a specific CC. Alternatively, the capability for the maximum bandwidth may differ among the UEs. In consideration of this, the BS may instruct the UE to operate only in a partial bandwidth, not the entire bandwidth of the wideband CC. The partial bandwidth is defined as a bandwidth part (BWP) for simplicity. Here, the BWP may be composed of resource blocks (RBs) contiguous on the frequency axis, and may correspond to one numerology (e.g., sub-carrier spacing, CP length, slot/mini-slot duration).

The BS may configure multiple BWPs in one CC configured for the UE. For example, a BWP occupying a relatively small frequency region may be configured in a PDCCH monitoring slot, and a PDSCH indicated by the PDCCH in a larger BWP may be scheduled. Alternatively, when UEs are concentrated in a specific BWP, some of the UEs may be configured in another BWP for load balancing. Alternatively, a spectrum in the middle of the entire bandwidth may be punctured and two BWPs on both sides may be configured in the same slot in consideration of frequency-domain inter-cell interference cancellation between neighbor cells. That is, the BS may configure at least one DL/UL BWP for the UE associated with the wideband CC and activate at least one DL/UL BWP among the configured DL/UL BWP(s) at a specific time (through L1 signaling, MAC CE or RRC signaling, etc.). The BS may instruct the UE to switch to another configured DL/UL BWP (through L1 signaling, MAC CE or RRC signaling, etc.). Alternatively, when a timer expires, the UE may switch to a predetermined DL/UL BWP. The activated DL/UL BWP is defined as an active DL/UL BWP. The UE may fail to receive DL/UL BWP configuration during an initial access procedure or before an RRC connection is set up. ADL/UL BWP assumed by the UE in this situation is defined as an initial active DL/UL BWP.

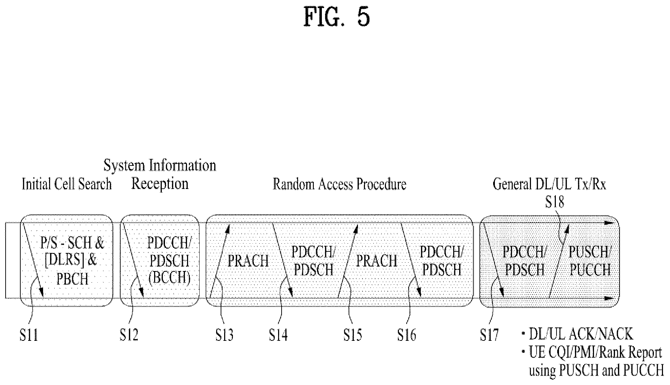

FIG. 5 is a diagram illustrating physical channels and a signal transmission method using the physical channels, which may be used in various embodiments.

Referring to FIG. 5, when powered on or when a UE initially enters a cell, the UE performs initial cell search involving synchronization with a BS in step S11. For initial cell search, the UE receives a synchronization signal block (SSB). The SSB includes a primary synchronization signal (PSS), a secondary synchronization signal (SSS), and a physical broadcast channel (PBCH). The UE synchronizes with the BS and acquires information such as a cell Identifier (ID) based on the PSS/SSS. Then the UE may receive broadcast information from the cell on the PBCH. In the meantime, the UE may check a downlink channel status by receiving a downlink reference signal (DL RS) during initial cell search.

After initial cell search, the UE may acquire more specific system information by receiving a physical downlink control channel (PDCCH) and receiving a physical downlink shared channel (PDSCH) based on information of the PDCCH in step S12.

Subsequently, to complete connection to the eNB, the UE may perform a random access procedure with the eNB (S13 to S16). In the random access procedure, the UE may transmit a preamble on a physical random access channel (PRACH) (S13) and may receive a PDCCH and a random access response (RAR) for the preamble on a PDSCH associated with the PDCCH (S14). The UE may transmit a physical uplink shared channel (PUSCH) by using scheduling information in the RAR (S15), and perform a contention resolution procedure including reception of a PDCCH signal and a PDSCH signal corresponding to the PDCCH signal (S16).

Aside from the above 4-step random access procedure (4-step RACH procedure or type-1 random access procedure), when the random access procedure is performed in two steps (2-step RACH procedure or type-2 random access procedure), steps S13 and S15 may be performed as one UE transmission operation (e.g., an operation of transmitting message A (MsgA) including a PRACH preamble and/or a PUSCH), and steps S14 and S16 may be performed as one BS transmission operation (e.g., an operation of transmitting message B (MsgB) including an RAR and/or contention resolution information)

After the above procedure, the UE may receive a PDCCH and/or a PDSCH from the BS (S17) and transmit a PUSCH and/or a physical uplink control channel (PUCCH) to the BS (S18), in a general UL/DL signal transmission procedure.

Control information that the UE transmits to the BS is generically called uplink control information (UCI). The UCI includes a hybrid automatic repeat and request acknowledgement/negative acknowledgement (HARQ-ACK/NACK), a scheduling request (SR), a channel quality indicator (CQI), a precoding matrix index (PMI), a rank indicator (RI), etc.

In general, UCI is transmitted periodically on a PUCCH. However, if control information and traffic data should be transmitted simultaneously, the control information and traffic data may be transmitted on a PUSCH. In addition, the UCI may be transmitted aperiodically on the PUSCH, upon receipt of a request/command from a network.

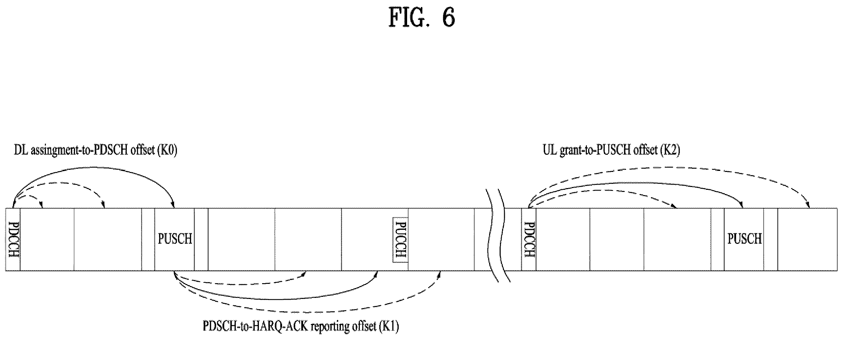

FIG. 6 illustrates an exemplary ACK/NACK transmission process

Referring to FIG. 6, the UE may detect a PDCCH in slot #n. The PDCCH includes DL scheduling information (e.g., DCI format 1_0 or DCI format 1_1). The PDCCH indicates a DL assignment-to-PDSCH offset, K0 and a PDSCH-to-HARQ-ACK reporting offset, K1. For example, DCI format 1_0 and DCI format 1_1 may include the following information.

Frequency domain resource assignment: Indicates an RB set assigned to a PDSCH.

Time domain resource assignment: Indicates K0 and the starting position (e.g., OFDM symbol index) and length (e.g., the number of OFDM symbols) of the PDSCH in a slot
PDSCH-to-HARQ_feedback timing indicator: Indicates K1.

HARQ process number (4 bits): Indicates the HARQ process ID of data (e.g., a PDSCH or TB).

PUCCH resource indicator (PRI): Indicates a PUCCH resource to be used for UCI transmission among a plurality of PUCCH resources in a PUCCH resource set.

After receiving a PDSCH in slot #(n+K0) according to the scheduling information of slot #n, the UE may transmit UCI on a PUCCH in slot #(n+K1). The UCI may include an HARQ-ACK response to the PDSCH. FIG. 5 is based on the assumption that the SCS of the PDSCH is equal to the SCS of the PUCCH, and slot #n1=slot #(n+K0), for convenience, which should not be construed as limiting the present disclosure. When the SCSs are different, K1 may be indicated/interpreted based on the SCS of the PUCCH.

In the case where the PDSCH is configured to carry one TB at maximum, the HARQ-ACK response may be configured in one bit. In the case where the PDSCH is configured to carry up to two TBs, the HARQ-ACK response may be configured in two bits if spatial bundling is not configured and in one bit if spatial bundling is configured. When slot #(n+K1) is designated as an HARQ-ACK transmission timing for a plurality of PDSCHs, UCI transmitted in slot #(n+K1) includes HARQ-ACK responses to the plurality of PDSCHs.

Whether the UE should perform spatial bundling for an HARQ-ACK response may be configured for each cell group (e.g., by RRC/higher layer signaling). For example, spatial bundling may be configured for each individual HARQ-ACK response transmitted on the PUCCH and/or HARQ-ACK response transmitted on the PUSCH.

When up to two (or two or more) TBs (or codewords) may be received at one time (or schedulable by one DCI) in a corresponding serving cell (e.g., when a higher layer parameter *maxNrofCodeWordsScheduledByDCI* indicates 2 TBs), spatial bundling may be supported. More than four layers may be used for a 2-TB transmission, and up to four layers may be used for a 1-TB transmission. As a result, when spatial bundling is configured for a corresponding cell group, spatial bundling may be performed for a serving cell in which more than four layers may be scheduled among serving cells of the cell group. A UE which wants to transmit an HARQ-ACK response through spatial bundling may generate an HARQ-ACK response by performing a (bitwise) logical AND operation on A/N bits for a plurality of TBs.

For example, on the assumption that the UE receives DCI scheduling two TBs and receives two TBs on a PDSCH based on the DCI, a UE that performs spatial bundling may generate a single A/N bit by a logical AND operation between a first A/N bit for a first TB and a second A/N bit for a second TB. As a result, when both the first TB and the second TB are ACKs, the UE reports an ACK bit value to a BS, and when at least one of the TBs is a NACK, the UE reports a NACK bit value to the BS.

For example, when only one TB is actually scheduled in a serving cell configured for reception of two TBs, the UE may generate a single A/N bit by performing a logical AND operation on an A/N bit for the one TB and a bit value of 1. As a result, the UE reports the A/N bit for the one TB to the BS.

There are plurality of parallel DL HARQ processes for DL transmissions at the BS/UE. The plurality of parallel HARQ processes enable continuous DL transmissions, while the BS is waiting for an HARQ feedback indicating successful or failed reception of a previous DL transmission. Each HARQ process is associated with an HARQ buffer in the medium access control (MAC) layer. Each DL HARQ process manages state variables such as the number of MAC physical data unit (PDU) transmissions, an HARQ feedback for a MAC PDU in a buffer, and a current redundancy version. Each HARQ process is identified by an HARQ process ID.

Below, the PUSCH transmission process is described.

the UE may detect a PDCCH in slot #n. The PDCCH includes DL scheduling information (e.g., DCI format 1_0 or 1_1). DCI format 1_0 or 1_1 may include the following information.

Frequency domain resource assignment: Indicates an RB set assigned to the PUSCH.

Time domain resource assignment: Indicates a slot offset K2 and the starting position (e.g., OFDM symbol index) and duration (e.g., the number of OFDM symbols) of the PUSCH in a slot. The starting symbol and length of the PUSCH may be indicated by a start and length indicator value (SLIV), or separately.

The UE may then transmit a PUSCH in slot #(n+K2) according to the scheduling information in slot #n. The PUSCH includes a UL-SCH TB.

### CSI related operation

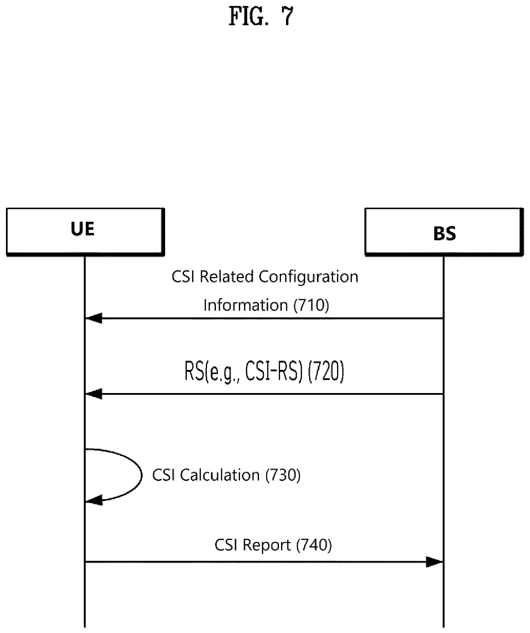

FIG. 7 shows an example of a CSI related procedure.

The UE receives configuration information related to CSI from the BS via RRC signaling

(710). The CSI-related configuration information may include at least one of channel state information-interference measurement (CSI-IM)-related information, CSI measurement-related information, CSI resource configuration-related information, CSI-RS resource-related information, or CSI report configuration-related information.
- A CSI-IM resource may be configured for interference measurement (IM) of the UE. In the time domain, the CSI-IM resource set may be configured periodic, semi-persistent, or aperiodic. The CSI-IM resource may be configured to zero power (ZP)-CSI-RS for the UE. ZP-CSI-RS may be configured to be distinguished from non-zero power (NZP)-CSI-RS.
- The UE may assume that CSI-RS resource(s) for channel measurement configured for one CSI reporting and CSI-IM/NZP CSI-RS resource(s) for interference measurement have a QCL relationship with respect to 'QCL-TypeD' for each resource (when NZP CSI-RS resource(s) are used for interference measurement).
- CSI resource configuration may include at least one of a CSI-IM resource for interference measurement, an NZP CSI-RS resource for interference measurement, and an NZP CSI-RS resource for channel measurement. The channel measurement resource (CMR) may be a NZP CSI-RS for CSI acquisition, and the interference measurement resource (IMR) may be an NZP CSI-RS for CSI-IM and IM.
- A CSI-RS may be configured for one or more UEs. Different CSI-RS configurations may be provided for each UE, or the same CSI-RS configuration may be provided to a plurality of UEs. The CSI-RS may support up to 32 antenna ports. CSI-RSs corresponding to N (N being 1 or more) antenna ports may be mapped to N RE locations within a time-frequency unit corresponding to one slot and one RB. When N is 2 or more, N-port CSI-RSs may be multiplexed in CDM, FDM and/or TDM methods. The CSI-RS may be mapped to the remaining REs except for REs to which CORESET, DMRS, and SSB are mapped. In the frequency domain, the CSI-RS may be configured for the entire bandwidth, a partial bandwidth part (BWP), or a partial bandwidth. The CSI-RS may be transmitted in each RB within the bandwidth in which the CSI-RS is configured (i.e., density = 1), or the CSI-RS may be transmitted in every second RB (e.g., even or odd RB) (i.e., density = 1/2). When the CSI-RS is used as a tracking reference signal (TRS), a single-port CSI-RS may be mapped on three subcarriers in each resource block (i.e., density = 3). One or more CSI-RS resource sets may be configured for the UE in the time domain. Each CSI-RS resource set may include one or more CSI-RS configurations. Each CSI-RS resource set may be configured periodic, semi-persistent, or aperiodic.
- The CSI report configuration may include configuration for a feedback type, a measurement resource, a report type, and the like. The NZP-CSI-RS resource set may be used for CSI reporting configuration of a corresponding UE. An NZP-CSI-RS resource set may be associated with the CSI-RS or the SSB. A plurality of periodic NZP-CSI-RS resource sets may be configured as TRS resource sets. (i) The feedback types include a channel quality indicator (CQI), a precoding matrix indicator (PMI), a CSI-RS resource indicator (CRI), an SSB resource block indicator (SSBRI), a layer indicator (LI), a rank indicator (RI), a first layer (L1)-reference signal received strength (RSRP), and the like. (ii) The measurement resource may include configuration for a downlink signal and/or downlink resource on which measurement is performed by the UE to determine feedback information. The measurement resource may be configured as a ZP and/or NZP CSI-RS resource set associated with the CSI report configuration. The NZP CSI-RS resource set may include a CSI-RS set or an SSB set. For example, the L1-RSRP may be measured for a CSI-RS set or for an SSB set. (iii) The report type may include configuration for a time when the UE performs a report and an uplink channel. The reporting time may be configured to be periodic, semi-persistent or aperiodic. The periodic CSI report may be transmitted on a PUCCH. The semi-persistent CSI report may be transmitted on a PUCCH or a PUSCH based on a MAC CE indicating activation/deactivation. The aperiodic CSI report may be indicated by DCI signaling. For example, a CSI request field of an uplink grant may indicate one of various report trigger sizes. The aperiodic CSI report may be transmitted on a PUSCH.

The UE measures CSI based on configuration information related to CSI. The CSI measurement may include receiving the CSI-RS (720) and acquiring the CSI by computing the received CSI-RS (730).

The UE may transmit a CSI report to the BS (740). For the CSI report, the time and frequency resource available to the UE are controlled by the BS. Channel state information (CSI) includes at least one of a channel quality indicator (CQI), a precoding matrix indicator (PMI), a CSI-RS resource indicator (CRI), a SS/PBCH block resource indicator (SSBRI), a layer indicator (LI), a rank indicator (RI), an L1-RSRP, and/or an L-SINR.

A time domain behavior of CSI reporting supports periodic, semi-persistent, aperiodic. i) Periodic CSI reporting is performed in a short PUCCH, a long PUCCH. Periodicity and a slot offset of periodic CSI reporting may be configured by RRC and refers to a CSI-ReportConfig IE. ii) SP (semi-periodic) CSI reporting is performed in a short PUCCH, a long PUCCH, or a PUSCH. For SP CSI in a short/long PUCCH, periodicity and a slot offset are configured by RRC and a CSI report is activated/deactivated by separate MAC CE/DCI. For SP CSI in a PUSCH, periodicity of SP CSI reporting is configured by RRC, but a slot offset is not configured by RRC and SP CSI reporting is activated/deactivated by DCI (format 0_1). For SP CSI reporting in a PUSCH, a separated RNTI (SP-CSI C-RNTI) is used. An initial CSI report timing follows a PUSCH time domain allocation value indicated by DCI and a subsequent CSI report timing follows a periodicity configured by RRC. DCI format 0_1 may include a CSI request field and activate/deactivate a specific configured SP-CSI trigger state. SP CSI reporting has activation/deactivation equal or similar to a mechanism having data transmission in a SPS PUSCH. iii) Aperiodic CSI reporting is performed in a PUSCH and is triggered by DCI. In this case, information related to trigger of aperiodic CSI reporting may be delivered/indicated/configured through MAC-CE. For AP CSI having an AP CSI-RS, AP CSI-RS timing is configured by RRC and timing for AP CSI reporting is dynamically controlled by DCI.

CSI codebooks defined in the NR standard (e.g., PMI codebook) may be broadly divided into Type I codebook and Type II codebook. The Type I codebook primarily targets single user (SU)-MIMO, supporting both high-order and low-order. The Type II codebook may mainly support MI-MIMO supporting up to 2 layers. Compared to Type I, the Type II codebook may provide more accurate CSI, but signaling overhead may increase correspondingly. The Enhanced Type II codebook is introduced to address the CSI overhead shortcomings of the existing Type II codebook by reducing the payload of the codebook by considering a correlation of the frequency axis.

CSI reporting via a PUSCH may be configured to Part 1 and Part 2. The Part 1 has a fixed payload size and is used to identify the number of bits of information in the Part 2. The Part 1 may be transmitted in its entirety before the Part 2.
- For Type I CSI feedback, the Part 1 includes RI (if reported), CRI (if reported), and CQI of a first code word. The Part 2 includes PMI, and when RI > 4, the Part 2 includes CQI.
- For Type II CSI feedback, the Part 1 includes an indication of the number of non-zero WB amplitude coefficients per layer of RI (if reported), CQI, and Type II CSI. The Part 2 includes the PMI of Type II CSI.
- For Enhanced Type II CSI feedback, the Part 1 includes an indication of the total number of non-zero WB amplitude coefficients for all layers of RI (if reported), CQI, and Enhanced Type II CSI. The Part 2 includes the PMI of Enhanced Type II CSI.

If CSI reporting on PUSCH includes two parts and the CSI payload to be reported is less than a payload size provided by the PUSCH resources allocated for CSI reporting, the UE may partially omit Part 2 CSI.

Semi-persistent CSI reporting performed in PUCCH format 3 or 4 supports Type II CSI feedback, but supports only Part 1 of Type II CSI feedback.

### Quasi-co location (QCL)

When the channel property of an antenna port is to be inferred from a channel of another antenna port, the two antenna ports are quasi co-located. The channel property may include one or more of delay spread, Doppler spread, frequency/Doppler shift, average received power, received Timing/average delay, and a spatial RX parameter.

A list of a plurality of transmission configuration indicator (TCI) state configurations may be configured in the UE through a higher layer parameter PDSCH-Config. Each TCI state is linked to a QCL configuration parameter between one or two DL reference signals and the DM-RS port of a PDSCH. The QCL may include qcl-Type1 for a first DL RS and qcl-Type2 for a second DL RS. The QCL type may correspond to one of the following.
- 'QCL-TypeA': {Doppler shift, Doppler spread, average delay, delay spread}
- 'QCL-TypeB': {Doppler shift, Doppler spread}
- 'QCL-TypeC': {Doppler shift, average delay}
- 'QCL-TypeD': {Spatial Rx parameter}

### Beam Management (BM)

BM is a series of processes for acquiring and maintaining a set of BS (or transmission and reception point (TRP)) beams and/or UE beams available for DL and UL transmissions/receptions. BM may include the following processes and terminology.

Beam measurement: The BS or the UE measures the characteristics of a received beamformed signal.

Beam determination: The BS or the UE selects its Tx beam/reception (Rx) beam.

Beam sweeping: A spatial domain is covered by using Tx beams and/or Rx beams in a predetermined manner during a predetermined time interval.

Beam report: The UE reports information about a beamformed signal based on a beam measurement.

The BM process may be divided into (1) a DL BM process using an SSB or a CSI-RS and (2) a UL BM process using a sounding reference signal (SRS). Further, each BM process may include Tx beam sweeping for determining a Tx beam and Rx beam sweeping for determining an Rx beam.

A DL BM process may include (1) transmission of beamformed DL RSs (e.g., CSI-RSs or SSBs) from a BS and (2) beam reporting from a UE.

Here, the beam report may include preferred DL RS ID(s) and reference signal received power(s) (RSRP(s)) corresponding to the preferred DL RS ID(s). A DL RS ID may be an SSB resource indicator (SSBRI) or a CSI-RS resource indicator (CRI).

### Full duplex operation for NR

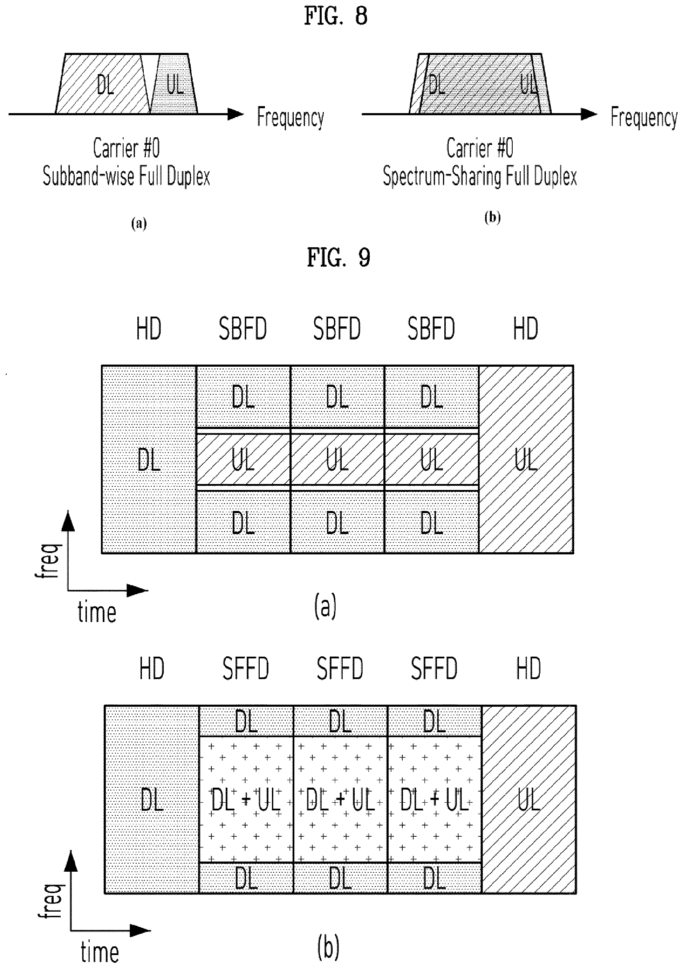

FIG. 8 is a diagram for explaining a method of performing a full duplex operation in an NR system.

In 5G, new types of services such as Extended reality (XR), AI-based services, and self-driving cars have been made. These services have the characteristics of dynamically changing traffic in both DL and UL directions and require low latency in packet transmission. 5G services may experience explosive increases in traffic load to support these diverse new use cases. On the other hand, the existing semi-static or dynamic TDD UL/DL configurations may have limitations in transmission time delay and interference between operators. The existing FDD method may have limitations in terms of efficient frequency resource utilization in the DL/UL directions. Therefore, introduction of a full duplex operation within a single carrier has been discussed for low latency and efficient resource utilization in NR.

Referring to FIG. 8, a method of applying the full duplex operation in an intra-carrier is illustrated. In detail, the full duplex operation may be considered as a subband-wise full duplex (SB-FD) scheme illustrated in (a) of FIG. 8 and a spectrum-sharing full duplex (SS-FD) scheme illustrated in (b) of FIG. 8.

For SB-FD, transmission and reception of DL and UL may be performed with different frequency resources in the same carrier. That is, DL and UL may have different frequency resources for the same time resource. For SS-FD, transmission and reception of DL and UL are performed through the same frequency resource or overlapped frequency resources in the same carrier. That is, for the same time resource, DL and UL may be allocated the same or overlapping frequency resources.

The full duplex operation may be combined with the existing half-duplex operation. For example, in the existing half-duplex-based TDD operation, only some time resources may be used for the full duplex operation. In time resources in which the full duplex operation is performed, either SB-FD or SS-FD operations may be performed.

Hereinafter, in a time resource operating as FD (e.g., SB-FD operation or SS-FD operation), a frequency resource operating as DL from among all frequency resources is defined as a DL sub-band, and a frequency resource operating as UL is defined as a UL sub-band.

In the case of full duplex (hereinafter, FD) operation as described above, the FD operation may be performed both from perspectives of a gNB and a UE. For example, both the gNB and the UE may perform transmission and reception of DL/UL simultaneously by using the same or different frequency resources in the same time resource. Alternatively, only the gNB may perform an FD operation (in the same time resource) and the UE may perform an HD operation. The gNB may simultaneously perform transmission and reception of DL and UL by using the same or different frequency resources in the same time resource, but the UE may perform only DL reception or UL transmission in a specific time resource. In this case, the gNB may perform the FD operation in a way that performs DL transmission and UL reception for different UEs at the same time (or, the same time resource).

The content described below is generally explained assuming that the gNB performs the FD operation and the UE performs the HD operation, but may also be applied to a case in which both the gNB and the UE perform the FD operation. Based on the above discussion, the following describes in detail a method of configuring a BWP resource for an intra-carrier FD operation.

### Background of FDR

Introduction of FDR has been discussed in certain scenarios (e.g. 3GPP RAN plenary). There are two types of FDRs discussed in the above scenarios, first, there is an FDR in which the gNB transmits and receives DL and UL (or transmits DL and receives UL) at the same frequency at the same time, and the other is an FDR in which the gNB transmits and receives DL and UL (or transmits DL and receives UL) at different frequencies at the same time. Here, different frequencies, unlike FDD, mean different frequency resources but different frequencies within the carrier or spectrum. For all cases, the UE may or may not support FDR, which means transmitting and receiving at the same time, whereas for all cases, it is assumed that the gNB performs transmitting and receiving at the same time.

In the operation of such FDR, gNB can consider dividing and setting the time intervals of HD (half duplex) and FD (full duplex). This can be largely divided into SBFD (sub-band full duplex) and SFFD (single frequency full duplex), and the slot configuration and cell resource pattern for this can be considered to operate based on the following example.

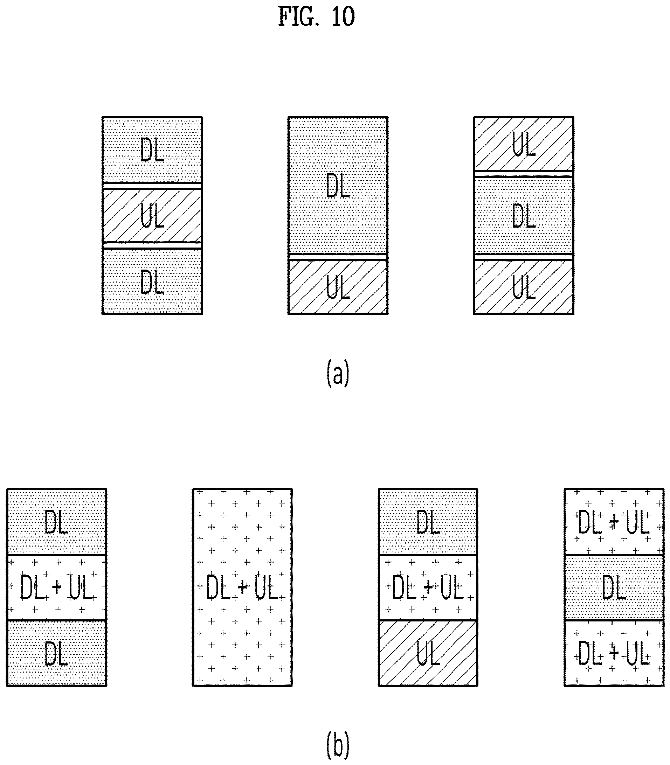

First, the SBFD may be considered as (a) of FIG. 9 and (a) of FIG. 10. In detail, referring to (a) of FIG. 10, a sub-band region of DL and a sub-band region of UL may not overlap each other. In this case, a guard band may exist between the sub-band region of DL and the sub-band region of UL (example of slot configuration). Alternatively, referring to (a) of FIG. 9, the SBFD operation may be performed based on a resource pattern of a cell or BS. For example, in the resource pattern, half-duplex (HD) slots/symbols and SBFD slots/symbols may be TDMed with each other.

Alternatively, examples shown in FIGS. 9(b) and 10(b) may be considered as the SFFD. In detail, referring to FIG. 10 (b), a subband region of DL and a subband region of UL may overlap each other. Alternatively, referring to FIG. 9 (b), an SFFD operation may be performed based on a resource pattern of a cell or BS. For example, in the resource pattern, a half-duplex (HD) slot/symbol and an SBFD slot/symbol may be TDMed with each other.

Hereinafter, for convenience of explanation, a time interval during which DL transmission and UL reception are present in the same/different frequencies at the same time in terms of a gNB operating in the SBFD (or SFFD) is defined as an SBFD slot, an SFFD slot, or a full duplex slot (or FD slot), and a slot during which the SBFD operation is not performed is defined as a half duplex slot (or HD slot). The SFFD may also be defined as spectrum sharing full duplex (SSFD), and a method in which DL and UL are transmitted and received through the same frequency resource of overlapping slots/symbols is defined as the SSFD and explained below.

### Method of indicating location of time resource in SBFD operation

As a type of full duplex, the SBFD method and SSFD method described above are currently being developed/discussed. The SBFD may utilize some slots/symbols/subbands of downlink (DL) in the existing dynamic TDD as uplink (UL) resources, and DL (or DL resources) and UL (or UL resources) may be present simultaneously in different subbands in the same slot/symbol. As such, the SBFD operation may be defined as a transmission/reception operation or full-duplex operation of a BS in a slot/symbol in which DL (or DL resources) and UL (or UL resources) are present simultaneously in different subbands. Here, the SSFD operation means DL and UL transmission and reception through the same frequency resources of the overlapping slots/symbols, unlike the SBFD described above. In addition, the current technology of the SBFD is half duplex in which a UE uses only one of UL/DL and full duplex in terms of a BS, but the present disclosure describes determination for the full duplex slot/symbol of the UE for the received indication, and thus may also be applied to the full duplex of the UE. Hereinafter, for convenience of explanation, the SBFD and the SSFD will be collectively referred to as an SBFD below.

During a time interval in which the SBFD operation is performed, the BS may perform DL transmission and UL reception operations simultaneously, and the UE may perform only one operation from among DL reception and UL transmission. In the SBFD time interval, the UE may perform only one operation from among DL reception and UL transmission, and thus, it may be difficult or impossible to distinguish between a time interval in which the SBFD operation is performed and a time interval in which the SBFD operation is not performed with only a simple configuration of DL/UL in the existing TDD. In the case of the SBFD operation, the operation for UL and the operation for DL may be performed simultaneously in the same slot/symbol, interference between a gNB and/or a UE may occur between inter Cell/intra Cell/subband/operator. This interference may be defined as cross link interference (CLI). As various methods for handling such CLI, self-interference cancelation in the gNB, power control for UL and DL, and a method of adjusting MCS may be considered, and the gNB and the UE need to perform a different operation from an operation in a time interval in which an HD operation is performed to perform a method for processing CLI in a time interval in which the SBFD operation is performed. For this end, the UE may need to distinguish between a time interval during which the SBFD operation is performed and a time interval during which the HD operation is performed.

Hereinafter, for convenience of explanation, time intervals, time resources, and symbols/slots during which the SBFD operation of a BS is performed are defined as SBFD time intervals. In this case, a start time resource or start point of the SBFD time interval may correspond to a first symbol/slot from among slots and/or symbols constituting the SBFD time interval, and the end or last time resource of the SBFD time duration may correspond to the last (or end) symbol/slot from among slots and/or symbols constituting the SBFD time interval. Duration related to the SBFD operation may correspond to a length of the SBFD time interval (or the number of symbols/slots provided in the SBFD time interval).

Methods proposed below may be applied to a time interval in which full-duplex operation (FD) is performed by the BS but half-duplex operation (HD) is performed by the UE, and the full-duplex operation (FD) by the BS may include both the SBFD operation and/or the SSFD operation described above. Hereinafter, for convenience of explanation, it is assumed that the SBFD operation is performed as a full-duplex operation by the BS, but the proposed methods below may be naturally applied not only to the SBFD operation but also to the SSFD operation.

As a method of indicating the SBFD time interval, an implicit indication method and an explicit indication method may be considered. The implicit indication method may be a method of implicitly including information about a time interval of the SBFD (or information about the SBFD) in indication information that an existing gNB instructs the UE to transmit. For example, TDD-UL-DL-ConfigCommon and TDD-UL-DL-ConfigDedicated may be provided in RRC parameter information of ServingCellConfigCommonSIB and ServingCellConfig, respectively. In this case, TDD information may be overlapped between TDD-UL-DL-ConfigDedicated and TDD-UL-DL-ConfigCommon for a specific time interval, and information for the SBFD time interval may be implicitly provided through the overlapped specific time interval (even though in a certain scenario (3GPP spec), TDD-UL-DL-ConfigDedicated is defined not to override information (TDD configuration information) previously configured via TDD-UL-DL-ConfigCommon). Hereinafter, the explicit indication method may be a method of providing the UE with information about a time interval of the SBFD (i.e., a time interval during which a full-duplex operation is performed by a BS) through definition of new indication information. A method of indicating a time interval of the SBFD using both the implicit indication method and the explicit indication method may also be considered/used.

### Implicit determination by TDD configuration

First, a time resource period assumed in relation to the method described above will be explained. Here, the time resource period may be one of parameters defined in TDD-UL-DL-ConfigCommon. In detail, the time resource period is for dl-UL- TransmissionPeriodicity for the gNB to inform the UE of UL-DL TDD configuration, and may correspond to a slot configuration period. In detail, parameters related to the time resource period may be defined/specified as shown in Table 5 below (refer to 3GPP TS 38.331). hereinafter, a method of (implicitly) indicating an SBFD time interval based on the time resource period will be described in detail.

**[Table 5]**

| ***TDD-UL-DL-Pattern* field descriptions** |
|---|
| ***dl- UL-TransmissionPeriodicity*** |
| Periodicity of the DL-UL pattern, see TS 38.213 [13], clause 11.1. If the *dl-UL-TransmissionPeriodicity-v1530* is signalled, UE shall ignore the *dl-UL-TransmissionPeriodicity* (without suffix). |
| ***nrofDownlinkSlots*** |
| Number of consecutive full DL slots at the beginning of each DL-UL pattern, see TS 38.213 [13], clause 11.1. In this release, the maximum value for this field is 80. |
| ***nrofDownlinkSymbols*** |
| Number of consecutive DL symbols in the beginning of the slot following the last full DL slot (as derived from *nrofDownlinkSlots*). The value 0 indicates that there is no partial-downlink slot. (see TS 38.213 [13], clause 11.1). |
| ***nrofUplinkSlots*** |
| Number of consecutive full UL slots at the end of each DL-UL pattern, see TS 38.213 [13], clause 11.1. In this release, the maximum value for this field is 80. |
| ***nrofUplinkSymbols*** |
| Number of consecutive UL symbols in the end of the slot preceding the first full UL slot (as derived from *nrofUplinkSlots*). The value 0 indicates that there is no partial-uplink slot. (see TS 38.213 [13], clause 11.1). |

As described above, the implicit indication method for the SBFD time interval has an advantage of not requiring a separate resource for indicating the SBFD time interval. TDD-UL-DL-ConfigCommon provided in ServingCellConfigCommonSIB, which is an RRC parameter, may first provide/distribute a common UL/DL configuration (for the time resource period) to all UEs within the cell (refer to TS 38.331). Here, all UEs within the cell may include both a legacy UE that does not support SBFD-related capabilities and a UE that supports SBFD-related capabilities. Here, a capability related to the SBFD may be a capability to perform a distinct operation for each SBFD time interval and each HD time interval and may be a capability to transmit an uplink signal or receive a downlink signal based on configuration information (power control parameters, MCS, or DMRS bundling) distinguished between the SBFD time interval and the HD time interval in the UE. Therefore, information about the SBFD time interval needs to be excluded from TDD-UL-DL-ConfigCommon, and thus a UL/DL configuration related to the SBFD time interval (or SBFD operation) needs to be provided in UE-specific or group common parameters (or information). For example, as a related parameter, there is TDD-UL-DL-ConfigDedicated provided in ServingCellConfig, which is an RRC parameter. There are two methods that may be applied to indicate an SBFD time interval (or indicate an SBFD configuration) via TDD-UL-DL-ConfigDedicated.

A first method may be to indicate the SBFD time interval via TDD-UL-DL-ConfigDedicated, which configures a UL/DL time interval that partially (or completely) overlapps TDD-UL-DL-ConfigCommon. A second method may be to define/configure all time intervals that may operate as SBFD from the beginning in TDD-UL-DL-ConfigCommon as flexible slots/symbols, and indicate the SBFD time interval with a UL/DL TDD configuration through newly defined UE/Cell-specific parameter (e.g., TDD-UL-DL-ConfigCommon-DE).

In detail, according to the first method, when TDD-UL-DL-ConfigDedicated configures a second TDD configuration that partially/completely conflicts with the first TDD configuration of TDD-UL-DL-ConfigCommon, the SBFD time interval (or the time interval for the SBFD operation) may correspond to the time interval overlapping between the first TDD configuration and the second TDD configuration. In some scenarios (e.g., TS 38.211), it is assumed that TDD-UL-DL-ConfigDedicated performs a TDD configuration that does not overlap the TDD configurations of TDD-UL-DL-ConfigCommon, and thus the first method may be defined as a new method not defined in the certain scenario. Alternatively, a new UE-specific RRC parameter (e.g., TDD-UL-DL-ConfigDedicated-DE) other than TDD-UL-DL-ConfigDedicated may be defined, and the SBFD time interval may be defined/indicated as a TDD configuration that partially/completely overlaps the TDD configuration of TDD-UL-DL-ConfigCommon via the new UE-specific RRC parameter. In this case, this may not be in conflict with the definition of the certain scenario.

The second method is to configure TDD (UL/DL configuration) by using a new cell-specific parameter. The second method differs from the first method described above by defining a new cell-specific (RRC) parameter (e.g., TDD-UL-DL-ConfigCommon-DE) for a UE that supports an operation related to the SBFD time interval. In this case, a legacy UE that does not support an operation capability related to the SBFD time interval performs a DL/UL configuration based on the existing TDD-UL-DL-ConfigCommon, and a UE that supports an operation capability related to the SBFD time interval may be configured with the SBFD operation or SBFD time interval as flexible (via TDD-UL-DL-ConfigCommon-DE), and may be UE-specifically configured with UL/DL for the time interval configured as flexible.

Hereinafter, for convenience of explanation, TDD-UL-DL-ConfigCommon, TDD-UL-DL-ConfigDedicated and/or TDD-UL-DL-ConfigCommon-DE, which configure DL/UL time resources within a time resource period, are defined as a TDD configuration. The time interval, time resources and/or DL slots during which a DL operation cnofigured based on the TDD configuration is performed are defined and explained as a DL time interval (or DL interval), and the time interval, UL time resources and UL slots/symbols during which a UL operation configured based on the TDD configuration is performed are defined and explained as a UL time interval (or UL interval).

Hereinafter, the proposed methods are configued based on the SBFD time interval, but the proposed methods described below may also be applied to the SSFD operation/time interval, and are not limited to the SBFD operation/time interval.

### Explicit configuration

An explicit configuration has an advantage that the SBFD time interval is to be explicitly indicated without ambiguity that may occurs from implicit indication (e.g., ambiguity or contradiction in indication/determination of SBFD time interval based on overlapping configurations between TDD-UL-DL-ConfigCommon and TDD-UL-DL-ConfigDedicated). In the explicit configuration, the location of the SBFD time interval, which is a time interval related to the SBFD operation, may be indicated in units of slots/symbols within the time resource period, and the following various alternatives may be considered in a manner of indicating the SBFD time interval in units of slots/symbols.

### 1. Definition of SBFD time interval based on time resource period for entire TDD-UL-DL-ConfigCommon

The SBFD time interval (slot/symbol) may be indicated based on the time resource period described above. As described above, the time resource period may be transferred to the UE via dl-UL-TransmissionPeriodicity of TDD-UL-DL-ConfigCommon. In this case, the UE may distinguish/configure boundaries of slots and symbols related to the time resource period based on the subcarrier spacing provided in referenceSubcarrierSpacing.

In detail, referring to Table 5, through nrofDownlinkSlots and nrofUplinkSlots, a DL/UL configuration may be configured in units of slots within the time resource period, and a DL interval (or a DL slot interval) may be configured from a slot in front of the time resource period, and a UL interval may be configured from a slot behind the time resource period. For example, nrofUplinkSlots may configure the UL interval by indicating the number of consecutive slots from an end slot of the time resource period, and nrofDownlinkSlots may configure the DL interval by indicating the number of consecutive slots from a start slot of the time resource period. Here, the start slot/end slot of the time resource period may be determined/configured based on the DL-UL pattern for the time resource period. After a UL-DL configuration in the slot unit, the DL/UL period may be configured in symbol units through nrofDownlinkSymbols and nrofUplinkSymols. For example, nrofDownlinkSymbols may indicate the number of DL symbols to be continuous from the start of a slot after the last slot of a DL (slot) period configured in the slot unit, and nrofUplinkSymols may indicate the number of UL symbols to be continuous from the end of a slot preceding the first slot of the UL (slot) interval configured in slot units. Similar to a method of configuring UL and DL intervals in units of symbols/slots, the SBFD time interval may also be indicated in a slot/symbol level within the time resource period of the entire TDD-UL-DL-ConfigCommon.

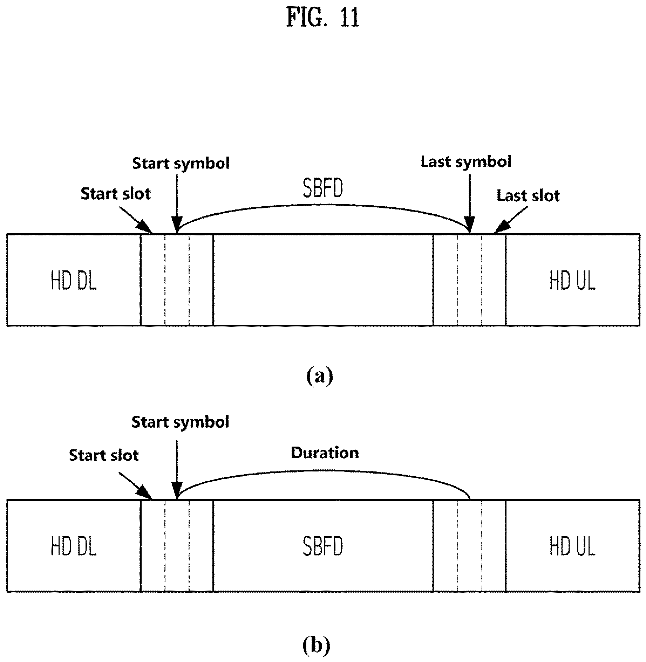

FIG. 11 is a diagram for explaining a method of determining an SBFD time interval within a time resource period based on a TDD configuration.

Hereinafter, with respect to section "1", a method of indicating/configuring a location of an SBFD time interval (or SBFD time resource) within a time resource period configured via TDD-UL-DL-ConfigCommon will be described in detail. Configuration information for indicating/configuring the location of the SBFD time interval may be provided/indicated to the UE through system information or RRC signaling. In this case, it may be assumed that the SBFD time interval includes consecutive symbols/slots.

### (1) Alt. 1-1

Alt. 1-1 may be a method of indicating the start slot/symbol and the last slot/symbol of the SBFD time interval.

Referring to FIG. 11 (a), the SBFD time interval may be specified/determined based on indication of the start slot/symbol and the last slot/symbol within the time resource period. In detail, in Alt. 1-1, the BS may indicate/configure the location of a start symbol and the location of a last symbol of the SBFD time interval (or a time resource operating as SBFD) to the UE. The location of the start symbol may mean the location of a first symbol in which the SBFD time interval (or SBFD time resource) starts based on a start position of the time resource period of the TDD configuration. For example, as illustrated in FIG. 11 (a), for indicating the start symbol, the location of the start slot and the location of the start symbol within the start slot may be indicated. In this case, the UE may determine a symbol indicated as a start symbol within a slot indicated as a start slot based on a start position of the time resource period as a start symbol of the SBFD time interval. The location of the last symbol may be the location of the last symbol at the end of the SBFD time interval based on an end position (or end) of the time resource period of the TDD configuration. For example, the location of the last symbol may be indicated by the location of the last slot and the location of the last symbol within the last slot. In this case, as illustrated in FIG. 11 (a), the UE may determine a symbol indicated as the location of the last symbol within a slot indicated as the last slot based on the end of the time resource period as a last symbol of the SBFD time interval. As described above, when the SBFD time interval is indicated by the location of the start symbol and the last symbol, the UE may determine the SBFD time interval in which the SBFD operation of the cell or BS is performed from the start symbol to the last symbol within the time resource period of the TDD configuration. The UE may determine/judge the remaining time resources, excluding the determined SBFD time interval, from the time resource period of the TDD configuration as a time interval or time resource in which the cell operates in TDD or HD.

### (2) Alt. 1-2: Indication of start slot/symbol and duration of SBFD time interval

Alt. 1-2 may be a method in which a BS indicates the SBFD time interval (or, SBFD slot/symbol) to the UE through a start slot/symbol and duration of the SBFD time interval.

In detail, referring to FIG. 11 (b), the SBFD time interval may be specified/determined based on the start slot/symbol and duration indicated by the BS. Here, the start symbol may mean the location of the first symbol in which the SBFD time interval (SBFD time resource) starts based on a start position of the time resource period of the TDD configuration. For example, to indicate the start symbol, the BS may indicate to the UE the location of the start slot and the location of the start symbol within the start slot. In this case, the UE may determine/judge a symbol indicated as a start symbol location within a slot indicated as a start slot based on a start position of the time resource period as a start symbol of the SBFD time interval. The Duration may mean the amount of time resources constituting the SBFD time interval or the number of consecutive time resources (slots/symbols) from a start position (or, start symbol) of the indicated SBFD time interval. For example, the duration may be indicated by the number of slots of the duration and the number of duration symbols within the duration. In this case, the UE may determine the number of consecutive slots equal to the number of duration slots based on the start slot in the time domain and the number of symbols equal to the number of duration symbols within the duration slot as the duration of the SBFD time interval. Alternatively, the duration may be indicated by the number of slots (or the number of consecutive slots) and the number of symbols (or the number of consecutive symbols). In this case, the UE may determine the number of consecutive symbols equal to 'the number of slots' * 'number of OFDM symbols constituting slot' + 'number of symbols' as duration of the SBFD time interval. As such, when determining the SBFD through indication of the start symbol and duration, the UE may determine the time resources having the duration from the start symbol within the time resource period of the TDD configuration as the SBFD time interval in which the cell performs the SBFD operation. The UE may determine/judge the remaining time resources, excluding the determined SBFD time interval, from the time resource period of the TDD configuration as a time interval or time resource in which the cell operates in TDD or HD.

### 2. Definition of SBFD time interval based on DL symbol within time resource period of TDD configuration

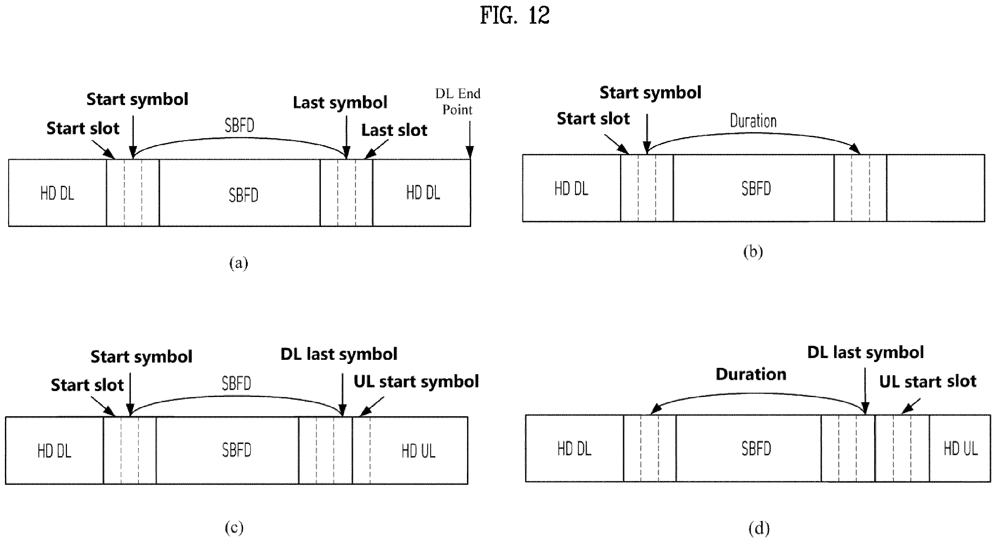

FIG. 12 is a diagram for explaining a method of indicating an SBFD time interval based on the DL symbol.

In dynamic TDD, it is common to configure TDD in the order of DL-flexible-UL. Considering this, the location of an SBFD time interval (or SBFD slot/symbol) may also be expected to be configured/indicated in the order of DL-SBFD-UL or DL-SBFD-flexible-UL. In other words, the SBFD time interval may be indicated (only) within the DL time interval configured by the TDD configuration. That is, in section "2", a method of configuring the location of the SBFD time interval within a time resource configured to DL by TDD-UL-DL-ConfigCommon (hereinafter, within the DL time interval) is proposed. Configuration information for indicating/configuring the SBFD time interval may be configured/indicated to the UE through system information or RRC configuration information. Here, the SBFD time interval may include consecutive symbols or time resources.

### (1) Alt. 2-1: Indication of start slot/symbol and last slot/symbol of SBFD slot/symbol within DL time interval

Referring to FIG. 12(a), in Alt. 2-1, a BS may indicate/configure the location of the start symbol and the location of the last symbol of the SBFD time interval to the UE. The location of the start symbol may mean the location of a first symbol in which the SBFD time interval (or SBFD time resource) starts based on a start position of the time resource period of the TDD configuration. For example, to indicate the start symbol, the location of the start slot and the location of the start symbol within the start slot may be indicated. In this case, as illustrated in FIG. 12(a), the UE may determine a symbol indicated as the start symbol within the slot indicated as the start slot as the start symbol of the SBFD time interval based on the start position of the time resource period. The last symbol may mean the location of the last symbol in which which the SBFD time interval ends based on the end position (DL end point) of the time resource constituting the DL time interval within the time resource period of the TDD configuration. As illustrated in FIG. 12(a), the last symbol may also be indicated through the location of the last slot and the location of the last symbol within the last slot. In this case, the UE may determine/judge a symbol indicated as a last symbol location within a slot indicated as a last slot based on an end position of a DL time interval within the time resource period as a last symbol of the SBFD time interval. As described above, when the SBFD time interval is indicated by the location of the start symbol and the last symbol, the UE may determine the SBFD time interval in which a cell performs the SBFD operation from the start symbol to the last symbol within the time resource period of the TDD configuration. The UE may determine/judge the remaining time resources, excluding the determined SBFD time interval, from the time resource period of the TDD configuration as a time interval or time resource in which the cell operates in TDD or HD.

### (2) Alt. 2-2: Indication of start slot/symbol and duration of SBFD time interval within DL time interval

Referring to FIG. 12(b), in Alt. 2-2 may be a method in which a BS indicates the SBFD time interval to the UE through a start slot/symbol and duration of the SBFD time interval. In this case, the UE may expect that the SBFD time interval indicated by the start slot/symbol and duration is to be located within the DL time interval. The start symbol of the SBFE time interval may mean the location of the first symbol in which the SBFD time interval (SBFD time resource) starts based on a start position of the time resource period of the TDD configuration. For example, to indicate the start symbol of the SBFD time interval, the BS may indicate to the UE the location of the start slot and the location of the start symbol within the start slot. In this case, as illustrated in FIG. 12(b), the UE may determine a symbol indicated as the start symbol location within the slot indicated as the start slot as the start symbol of the SBFD time interval based on the start position of the time resource period. The Duration may mean the amount of time resources constituting the SBFD time interval or the number of consecutive time resources (slots/symbols) from a start position (or, start symbol) of the SBFD time interval. For example, the duration may be indicated by the number of slots of the duration and the number of duration symbols within the duration. In this case, the UE may determine, as duration of the SBFD time interval, the symbol indicated by a location advanced by a duration symbol within a slot advanced by the number of duration slots based on a start slot of the SBFD time interval. Alternatively, the duration may be indicated by the number of slots (or the number of consecutive slots) and the number of symbols (or the number of consecutive symbols). In this case, the UE may determine the number of consecutive symbols equal to 'the number of slots' * 'number of OFDM symbols constituting slot' + 'number of symbols' as duration of the SBFD time interval. In this case, the SBFD time interval is configured to be located within the DL time interval configured by the TDD configuration. As such, when determining the SBFD through indication of the start symbol and duration, the UE may determine the time resources having the duration from the start symbol within the time resource period of the TDD configuration as the SBFD time interval in which the cell performs the SBFD operation. The UE may determine/judge the remaining time resources, excluding the determined SBFD time interval, from the time resource period of the TDD configuration as a time interval or time resource in which the cell operates in TDD or HD.

### (3) Alt. 2-3: Indication of only start slot/symbol of SBFD time interval.

Referring to FIG. 12(c), in Alt. 2-3, the BS may only indicate the start slot/symbol of the SBFD time interval to the UE. The location of the start symbol of the SBFD time interval may mean the location of a first symbol in which the SBFD time interval (or SBFD time resource) starts based on a start position of the time resource period of the TDD configuration. For example, for indicating the start symbol of the SBFD time interval, the location of the start slot and the location of the start symbol within the start slot may be indicated. In this case, the UE may determine a symbol indicated as a start symbol within a slot indicated as a start slot based on a start position of the time resource period as a start symbol of the SBFD time interval. With respect to determining the end symbol of the SBFD time interval, as illustrated in FIG. 12(c), even if there is no indication of the last symbol for the SBFD time interval, the UE may (implicitly) determine/judge an interval from the indicated start symbol to the last symbol of the DL time interval as the SBFD time interval through the TDD configuration (e.g., TDD-UL-DU-ConfigCommon). Alternatively, the UE may determine the symbol immediately preceding the start symbol of the UL time interval according to the TDD configuration to be the last symbol of the SBFD time interval. This method has an advantage that one parameter for indicating the SBFD time interval is reduced.

### (4) Alt. 2-4: Indication of only duration of SBFD time interval

Referring to FIG. 12(d), in Alt. 2-4, the BS may only indicate the duration of the SBFD time interval to the UE. The Duration may mean the amount of time resource or the number of time resources that the SBFD time resource continues (or continues) based on the end position of the SBFD time interval. For example, the duration may be indicated by the number of slots of the duration and the number of duration symbols within the duration. In this case, the UE may determine the duration of the SBFD time interval as a symbol indicated by a location advanced in a reverse direction of a time resource by the number of duration symbols within a slot advanced in a reverse direction of a time resource by the number of the duration slots based on a start slot of a UL time interval configured by a TDD configuration (or, the start symbol of the start slot). Alternatively, the duration may be indicated by the number of slots (or the number of consecutive slots) and the number of symbols (or the number of consecutive symbols). In this case, the UE may determine the number of symbols equal to 'the number of slots' * 'number of OFDM symbols constituting slot' + 'number of symbols' as duration of the SBFD time interval. In this case, the UE may (implicitly) determine the symbols equal to the duration of the SBFD time interval in reverse time order from the last symbol of the DL time interval (or the start symbol of the UL time interval or the symbol immediately preceding the start symbol of the UL time interval) configured through the TDD configuration (e.g., TDD-UL-DU-ConfigCommon) as the SBFD time interval in which the cell performs the SBFD operation. This method has an advantage that one parameter for indicating the SBFD time interval is reduced.

### 3. Definition of SBFD time interval based on DL + flexible symbol within time resource period of TDD configuration

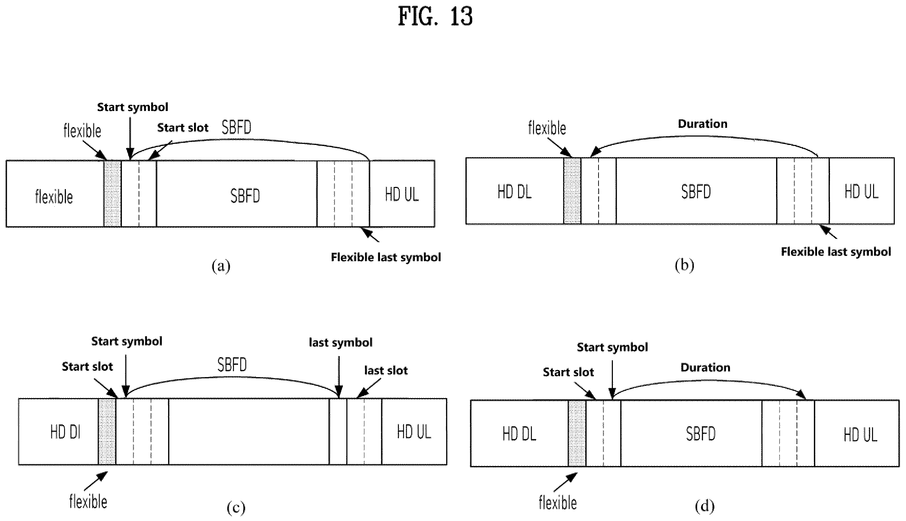

FIG. 13 is a diagram for explaining a method of configuring an SBFD time interval within a flexible time interval. For example, the TDD configuration may include information about time resource periods TDDed into a DL time interval, a UL time interval, and a flexible time interval.

Section "3" is similar to Section "2" but may be a case in which the SBFD time interval is configured within the flexible time interval in addition to the DL/UL time interval. Only only a semi-static operation is described below, and thus a dynamic operation in the flexible time interval is not described. In Section "3", a flexible time interval may be configured between the DL time interval and the UL time interval, such as DL-flexible-UL, and an SBFD time interval may be additionally configured/defined between the DL time interval and the flexible time interval. In this case, lastly, DL-SBFD-flexible-UL may be configured within the time resource period. In this case, the SBFD time interval may be defined together with the DL time interval, the UL time interval, and the flexible time interval, and it is obvious that the DL-SBFD-flexible-UL described above does not specify the definition/indication order of the time interval described above.

In Section "3", a method of configuring the location of an SBFD time interval (time resources operating as SBFD) within time resources configured as a DL time interval and a flexible time interval by TDD-UL-DL-ConfigCommon. The configuration information may be configured to the UE through system information or RRC configuration information. The SBFD time interval may include consecutive symbols (or slots).

When configuration is performed as DL-SBFD-flexible-UL, a configuration method of the SBFD time interval may differ based on the flexible time interval. Hereinafter, a case in which a last symbol of the SBFD time interval corresponds to an end symbol of the flexible time interval (e.g., a case in which the SBFD operation is performed until the end of the flexible time interval) and a case in which the last symbol of the SBFD time interval does not correspond to the end symbol of the flexible time interval (e.g., a case in which the SBFD operation is not performed until the end of the flexible time interval) are separately described in detail.

### (1) When the last symbol of the SBFD time interval matches/corresponds to the last symbol of the flexible time interval

This describes a case in which the last symbol of the SBFD time interval is indicated as the last symbol of the flexible time interval (i.e., the SBFD operation of the BS is performed until the end of the flexible time interval). In this case, in a similar method to 'Alt. 2-3' and 'Alt. 2-4', the SBFD time interval may be indicated.

### 1) Alt. 3-1: Indication of only start slot/symbol of SBFD time interval.

Referring to FIG. 13(a), in Alt. 3-1, the BS may only indicate the start slot/symbol of the SBFD time interval to the UE. The location of the start symbol of the SBFD time interval may mean the location of a first symbol in which the SBFD time interval (or SBFD time resource) starts based on a start position of the time resource period of the TDD configuration. For example, for indicating the start symbol of the SBFD time interval, the location of the start slot and the location of the start symbol within the start slot may be indicated. In this case, the UE may determine a symbol indicated as a start symbol within a slot indicated as a start slot based on a start position of the time resource period as a start symbol of the SBFD time interval. Here, as illustrated in FIG. 13(a), the last symbol of the SBFD time interval may be determined as the last symbol of the Flexible time interval even without a separate indication. Alternatively, the last symbol of the SBFD time interval may be determined as the symbol immediately preceding the start symbol of the UL time interval.

In detail, it is expected/predicted that a UL time interval (of TDD configuration) may be configured after an SBFD time interval, and thus the UE may (implicitly) determine/estimate a symbol immediately before the start of a UL time interval according to pre-configured/defined RRC configuration information (e.g., TDD-UL-DL-ConfigCommon, TDD-UL-DL-ConfigCommon-DE, TDD-UL-DL-ConfigDedicated, or TDD-UL-DL-ConfigDedicated-DE) as the last symbol of the SBFD time interval, even if there is no indication of the last symbol of the SBFD time interval. In this case, there is an advantage that an indicated parameter of the last symbol may be omitted.

### 2) Alt. 3-2: Indication of only duration of SBFD time interval

Referring to FIG. 13(b), in Alt. 3-2, the BS may only indicate the duration of the SBFD time interval to the UE. The Duration may mean the amount of time resource or the number of time resources that the SBFD time resource continues (or continues) based on the end position of the SBFD time interval. For example, the duration may be indicated by the number of slots of the duration and the number of duration symbols within the duration. Alternatively, the duration may be indicated by the number of slots (or the number of consecutive slots) and the number of symbols (or the number of consecutive symbols). In this case, the UE may determine the number of slots equal to 'the number of slots' * 'number of OFDM symbols constituting slot' + 'number of symbols' as duration of the SBFD time interval. In this case, the UE may determine/specify the symbols equal to the duration as the SBFD time interval in reverse time order from the start symbol location of the UL time interval configured based on the TDD configuration (e.g., TDD-UL-DU-ConfigCommon). In this case, there is an advantage in that parameter indicating the last symbol and the start symbol may be omitted.

### (1) When the last symbol of the SBFD time interval does no match/correspond to the last symbol of the flexible time interval

When the last symbol (end) of the SBFD time interval does not match the last symbol (end) of the flexible time interval, similarly to Alt. 3-1 or Alt. 3-2, the start symbol/last symbol of the SBFD time interval may not be implicitly indicated. Therefore, when the end of the SBFD time interval does not match the end of the flexible time interval, similar to Alt. 2-1 and Alt. 2-2, the BS needs to explicitly configure/indicate the UE the start symbol and the last symbol of the SBFD time interval (or, the start and end of the SBFD time interval).

### 1) Alt. 3-3: SBFD Indication of start slot/symbol and last slot/symbol of time interval

Referring to FIG. 13(c), in Alt. 3-3, a BS may indicate/configure the location of the start symbol and the location of the last symbol of the SBFD time interval to the UE. The location of the start symbol of the SBFD time interval may mean the location of a first symbol in which the SBFD time interval (or SBFD time resource) starts based on a start position of the time resource period of the TDD configuration. For example, for indicating the start symbol of the SBFD time interval, the location of the start slot and the location of the start symbol within the start slot may be indicated. In this case, as illustrated in FIG. 13(a), the UE may determine a symbol indicated as the start symbol within the slot indicated as the start slot as the start symbol of the SBFD time interval based on the start position of the time resource period. The last symbol may be indicated by the location of the last slot and the location of the last symbol within the last slot. Here, the last symbol may mean the location of the last symbol of the SBFD time interval based on the start position of the UL time resource within the time resource period of the TDD configuration. Alternatively, the UE may determine the symbol indicated as the last symbol position within the slot indicated as the last slot based on the end position of the time resource period as the last symbol of the SBFD time interval. As described above, when the SBFD time interval is indicated by the location of the start symbol and the last symbol, the UE may determine the SBFD time interval in which a cell performs the SBFD operation from the start symbol to the last symbol within the time resource period of the TDD configuration. The UE may determine/judge the remaining time resources, excluding the determined SBFD time interval, from the time resource period of the TDD configuration as a time interval or time resource in which the cell operates in TDD or HD. In this case, a range of the SBFD time interval is explicitly indicated, and thus there is an advantage in that the SBFD time interval is to indicated regardless of whether the flexible time interval is present.

### 2) Alt. 3-4: Indication of start slot/symbol and duration of SBFD time interval

Referring to FIG. 13(d), in Alt. 3-4, the BS may indicate the start slot/symbol and duration of the SBFD time interval to the UE. The start symbol of the SBFE time interval may mean the location of the first symbol in which the SBFD time interval (SBFD time resource) starts based on a start position of the time resource period of the TDD configuration. For example, to indicate the start symbol of the SBFD time interval, the BS may indicate to the UE the location of the start slot and the location of the start symbol within the start slot. In this case, the UE may determine/judge a symbol indicated as a start symbol location within a slot indicated as a start slot based on a start position of the time resource period as a start symbol of the SBFD time interval. The Duration may mean the amount of time resources constituting the SBFD time interval or the number of consecutive time resources (slots/symbols) from a start position (or, start symbol) of the SBFD time interval. For example, the duration may be indicated by the number of slots of the duration and the number of duration symbols within the duration. In this case, the UE may proceed as many times as the number of duration slots based on the start slot and determine the symbols up to the number of duration symbols within the duration slot as the duration of the SBFD time interval. Alternatively, the duration may be indicated by the number of slots (or the number of consecutive slots) and the number of symbols (or the number of consecutive symbols). In this case, the UE may determine the number of symbols equal to 'the number of slots' * 'number of OFDM symbols constituting slot' + 'number of symbols' as duration of the SBFD time interval. In this case, the SBFD time interval may be configured only within the DL time interval and/or the Flexible time interval configured by the TDD configuration. As such, when determining the SBFD through indication of the start symbol and duration, the UE may determine the time resources having the duration from the start symbol within the time resource period of the TDD configuration as the SBFD time interval in which the cell performs the SBFD operation. The UE may determine/judge the remaining time resources, excluding the determined SBFD time interval, from the time resource period of the TDD configuration as a time interval or time resource in which the cell operates in TDD or HD. In this case, a range of the SBFD time interval is explicitly indicated, and thus there is an advantage in that the SBFD time interval is to indicated regardless of whether the flexible time interval is present.

### Additional configuration information of H/S/NA for SBFD time interval

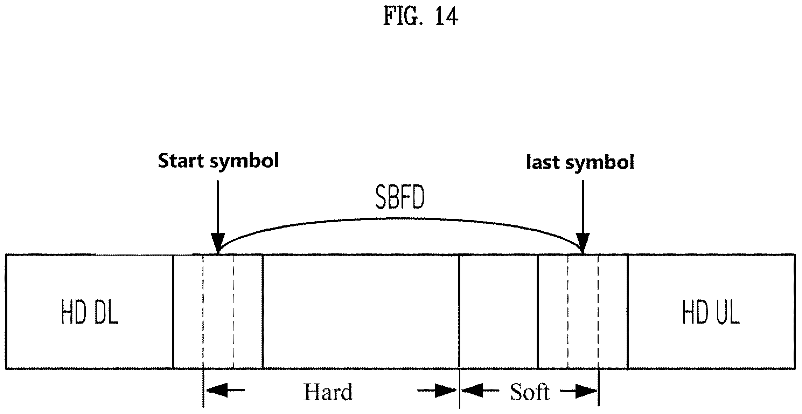

FIG. 14 is a diagram for explaining a method of additionally indicating Hard and Soft intervals for an SBFD time interval.

A method in which a gNB semi-statically informs the UE of Hard/Soft with respect to a time interval (or, HD operation interval/SBFD operation interval) including an HD time interval/SBFD time interval may also be applied. When Hard is indicated for a specific time interval (or some time intervals) in the time interval, the UE may determine/assume that there is no change in the HD time interval/SBFD time interval provided in the specific time interval. For example, the UE may determine/assume that the time interval of the SBFD within the specific time interval indicated by the Hard is not changed/transitioned to the time interval of the HD due to dynamic indication (DCI, MAC CE, or SFI).

In contrast, when Soft is indicated for a specific time interval (or, some of the time intervals) in the time interval, the UE may perform an operation according to the HD time interval and SBFD time interval configured for the specific time interval if there is no separate indication (using dynamic indication) for the specific time interval indicated as Soft, but may determine that the configured SBFD time interval may be changed to the HD time interval (and/or the configured HD time interval may be changed to the SBFD time interval) if there is a separate indication. For example, when a specific time interval is indicated as Soft in a time interval in which an HD time interval and an SBFD time interval are configured through RRC signaling, or the like, the UE may determine that the SBFD time interval (or SBFD operation interval) within the specific time interval has been changed to an HD time interval (or HD operation interval) by receiving a dynamic indication. Therefore, if there is an additional Hard/Soft indication, the UE may not need a separate additional indication for the SBFD time interval (or the SBFD operation) in the time interval indicated as Hard, but a separate explicit indication (dynamic indication such as DCI, MAC CE, or SFI) may be required/exist for the SBFD time interval provided in the time interval indicated as Soft.

In detail, referring to FIG. 14, the UE may receive (semi-static) indication information indicating a Soft interval and a Hard interval for a SBFD time interval specified/indicated by the indication method described above. Here, the indication information may indicate at least one of the Soft period and the Hard period by using at least one of the indication methods described above. For example, the indication information may include information about at least one of a start slot/start symbol, a last slot/last symbol, or a duration for a Soft interval (and/or a Hard interval).

For example, information about the Soft interval may be transferred through *HS Slot Configuration List* provided in *SBFD Cell Resource Configuration* as shown in Table 6 (refer to TS 38.473).

**[Table 6]**

| | |
|---|---|
| With reference to slots of a full-duplex cell, a symbol in a slot of a full-duplex cell ca n be configured to be of hard or soft type by *HS Slot Configuration List* in *SBFD Cell Resource Configuration*. | |
| When a full-duplex symbol is configured as hard, the full-duplex cell can respectively transmit, receive, or either transmit or receive in the full-duplex symbol. | |
| When a full-duplex symbol is configured as soft, | |
| | - the full-duplex cell can respectively change the full-duplex operation to half-duplex operation in the symbol. |
| | - if The full-duplex UE does not detect a dynamic indication (ex. DCI format 2_5), the soft symbol is available as full-duplex symbol. |
| | - if The full-duplex UE detects a dynamic indication (ex. DCI format 2_5), the soft symbol is available as UL or DL. |

In this case, the UE may monitor whether a dynamic indication (dynamic indication such as DCI, MAC CE, or SFI, etc.) related to the Soft interval is received. When the dynamic indication is not detected, the UE may determine/expect the Soft interval to be a time interval during which a full-duplex operation of a BS is performed as previously configured (i.e., SBFD time interval). Alternatively, the UE may determine/expect that the Soft interval has been changed to a time interval during which a half-duplex operation of the BS is performed, unlike the existing configuration, when the dynamic indication is detected. In the SBFD time intervals, the Hard interval configured as Hard may be determined as a time interval (i.e., SBFD time interval) in which the full-duplex operation of the BS is performed as before even if the dynamic indication is received.

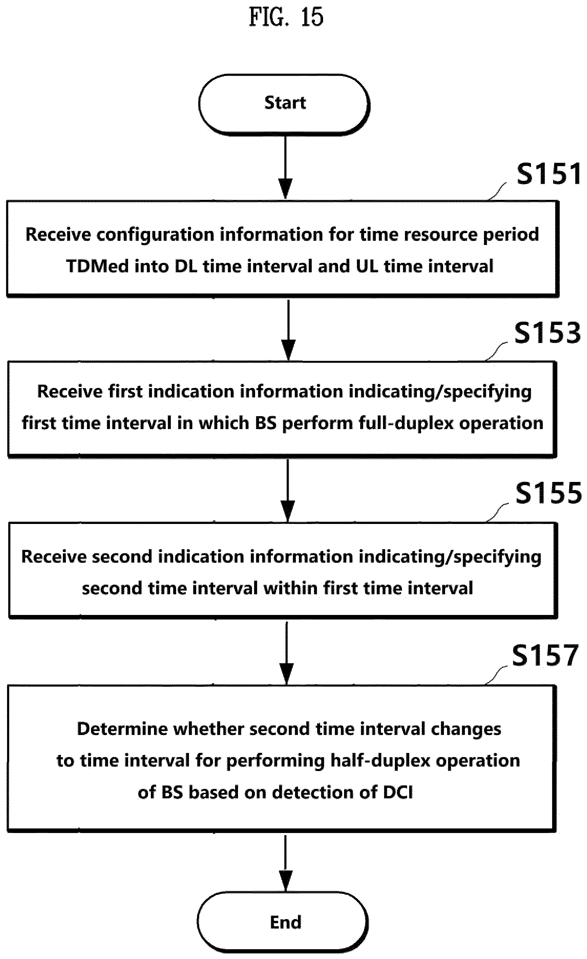

FIG. 15 is a diagram for explaining a method for a UE to configure/receive a first time interval in which a full-duplex operation of a BS is performed in a time resource period according to a TDD configuration.

Referring to FIG. 15, the UE may receive configuration information for a time resource period in which a downlink (DL) time interval (or slots/symbols for downlink operation) and an uplink (UL) time interval (or slots/symbols for uplink operation) are time-division duplexed (TDD) (S151). Alternatively, the time resource period may further include a flexible time interval in addition to the DL time interval and the UL time interval. As described above, the configuration information may be RRC information of TDD-UL-DU-ConfigCommon and may be received via RRC signaling.

Then, the UE may receive first indication information indicating/specifying a first time interval during which the BS performs full-duplex operation in a time resource period (S153). The first indication information may include information on at least one of a start symbol/slot of the first time interval, a last symbol/slot of the first time interval, or a duration of the first time interval, as described with reference to FIGS. 11 to 13. In this case, the UE may specify/determine the first time interval by using the start symbol/slot of the first time interval and the last symbol/slot of the first time interval included in the first indication information, as described with reference to FIGS. 11 to 13, or may specify/determine the first time interval by using information about the start symbol/slot and duration of the first time interval provided in the first indication information. Here, information about the duration may include information about the number of slots and/or the number of symbols provided in the first time interval.

Here, a frequency band for the first time interval during which a full-duplex operation of the BS is performed may be divided into a DL subband through which the BS transmits a downlink signal and a UL subband through which an uplink signal is received. In this case, the full-duplex operation of the BS may be the SBFD operation described above when the DL subband and the UL subband are configured not to overlap, and may be the SSFD operation described above when the DL subband and the UL subband are configured to partially/completely overlap. The UE, unlike the BS, may only perform half-duplex operation (HD operation) according to the configuration information even in the first time interval. That is, the UE only performs an operation of transmitting an uplink signal or a operation of receiving a downlink signal based on the configuration information in the first time interval, and does not perform the operation of transmitting an uplink signal and the operation of receiving a downlink signal simultaneously.

Alternatively, the first indication information may include only information on one of the start symbol/slot of the first time interval, the last symbol/slot of the first time interval, and the duration of the first time interval. In this case, it may be previously indicated or defined whether the first time interval is configured/indicated (only) within the DL time interval or configured/indicated (only) within the flexible time interval. In this case, the UE may specify/determine the first time interval based on the prior information about which time interval the first time interval is configured/indicated in and the first indication information. For example, as described with reference to FIG. 12, when the first indication information includes only information about the start symbol/slot and the configuration of the first time interval within the DL time interval is expected, the UE may specify a start time of the first time interval indicated by the first indication information based on the start time of the time resource period, and determine the end of the first time interval as the last symbol of the DL time interval (or, the symbol immediately before the start symbol of the UL time interval). Alternatively, when the first indication information includes only information about the duration and configuration of the first time interval within the DL time interval is expected, as illustrated in FIG. 12(d), the UE may determine a time interval including as many slots/symbols as the number of slots/symbols provided in the information about the duration within the DL time interval based on the last symbol of the DL time interval as the first time interval.

Alternatively, as described with reference to FIG. 13, when the first indication information includes only information about the start symbol/slot and the configuration of the first time interval within the flexible time interval is expected, the UE may specify a start symbol of the first time interval indicated by the first indication information based on the start position of the time resource period, and determine the end of the first time interval as the last symbol of the flexible time interval (or, the symbol immediately before the start symbol of the UL time interval). Alternatively, when the first indication information includes only information about the duration and configuration of the first time interval within the flexible time interval is expected, as illustrated in FIG. 13(b), the UE may determine a time interval including as many slots/symbols as the number of slots/symbols provided in the information about the duration within the flexible time interval based on the last symbol of the flexible time interval as the first time interval.

Here, the UE may divide the time resource period into a first time interval and a third time interval, which is a time interval remaining from the time resource period except the first time interval (i.e., a time interval in which an HD operation of the BS is performed). In this case, even if the UE performs only a half-duplex operation in both the first time interval and the third time interval, the UE may perform different operations in each of the first time interval and the third time interval by considering differences in channel environments, or the like between the two time intervals. For example, the UE may have a different frequency band for transmitting an uplink signal in the third time interval and a different frequency band for transmitting an uplink signal in the first time interval. The UE may be scheduled with a frequency resource for transmission of the uplink signal within an uplink bandwidth part (BWP) in the third time interval, but may be scheduled with a frequency resource for transmission of the uplink signal only within the uplink subband as described above for the first time interval.

Alternatively, the UE may differently determine transmission power of the uplink signal for each of the first time interval and the third time interval. For example, when the UE determines the transmission power of the uplink signal based on Open Loop Power Control (OLPC), the UE may transmit the uplink signal with a higher transmission power for the first time interval than for the third time interval. Alternatively, the UE may be configured with an MCS for each of the first time interval and the third time interval. For example, when the UE transmits an uplink signal based on the CG configuration, a first MCS for the first time interval and a second MCS (different from the first MCS) for the third time interval may be configured, respectively. In this case, the UE may transmit the uplink signal based on the first MCS when transmission of the uplink signal based on the CG configuration is performed in the first time interval, and may transmit the uplink signal based on the second MCS when transmission of the uplink signal based on the CG configuration is performed in the third time interval. Alternatively, the UE may be configured with a first MCS table related to the first time interval and a second MCS table related to the third time interval.

Alternatively, the UE may repeatedly transmit the DMRS bundled uplink signal. In this case, the UE may not perform DMRS bundling through the first time interval and the third time interval. For example, the UE may receive an indication related to DMRS bundling from a BS and repeatedly transmit a DMRS bundled uplink signal based on a configured nominal time domain window (TDW). In this case, when the actual TDW is configured over the first time interval and the third time interval, the UE may determine/consider that the actual TDW has ended at a boundary of the first time interval and the third time interval and perform the DMRS bundling. This is because, as described above, in the first time interval, an uplink signal and a downlink signal may be simultaneously transmitted and received in two adjacent frequency bands (UL subband and DL subband), and due to the transmission and reception of the two signals, significant interference (CLI) occurs in the first time interval, and thus a channel environment of the third time interval and the first time interval may be different.

Then, the UE may receive the second indication information indicating/specifying a second time interval within the first time interval from the BS (S155). The second time interval may be a time interval that is to be changed to a time interval for an HD operation (i.e., a time interval in which the BS performs a half-duplex operation) in the first time interval, as described with reference to FIG. 14. The UE may specify a second time interval changeable as a time interval for an HD operation of the BS in the first time interval and a fourth time interval fixed as a time interval for an SBFD operation of the BS through the second indication information. The second indication information may also indicate the second time interval (and/or the fourth time interval) through information on at least one of a start slot/symbol, a last slot/symbol, or a duration of the second time interval (and/or the fourth time interval).

Then, the UE may monitor whether to receive/detect downlink control information (DCI) indicating a change in the operation of the BS for the second time interval (S157). Here, the DCI may be information notifying or indicating a change from a full-duplex operation of the BS to a half-duplex operation of the BS in the second time interval based on the DCI format 2.5 described above. In this case, the UE may determine that an operation of the BS has been changed from the full-duplex operation to the half-duplex operation in the second time interval when the DCI is received/detected. Alternatively, the UE may determine that an operation of the BS is maintained in a full-duplex operation during the second time interval if the DCI is not detected. During the fourth time interval, the full-duplex operation of the BS may be continuously performed regardless of reception/detection of the DCI.

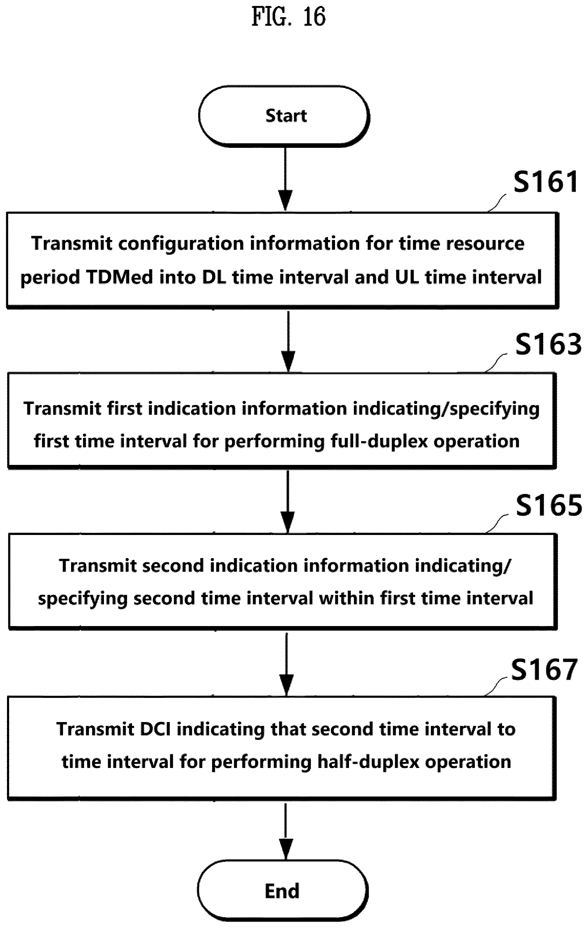

FIG. 16 is a diagram for explaining a method for a BS to configure/receive a first time interval in which a full-duplex operation of a BS is performed in a time resource period according to a TDD configuration.

Referring to FIG. 16, the BS may transmit to the UE configuration information for a time resource period in which a downlink time interval and an uplink time interval are time-divided (Time Division Duplexing, TDD) (S161). Here, the configuration information may be signaled via a parameter such as TDD-UL-DU-ConfigCommon as described above. The time resource period may further include a flexible time interval in addition to the DL time interval and the UL time interval.

Then, the BS may transmit, to the UE, first indication information indicating/specifying a first time interval during which the BS performs full-duplex operation in the time resource period (S163). Here, the first indication information may also be transmitted to the UE via RRC signaling in the same manner as the configuration information. The first indication information may include information on at least one of a start symbol/slot of the first time interval, a last symbol/slot of the first time interval, or a duration of the first time interval, as described with reference to FIGS. 11 to 13. Here, a frequency band for the first time interval during which a full-duplex operation of the BS is performed may be divided into a DL subband through which the BS transmits a downlink signal and a UL subband through which an uplink signal is received. In this case, the full-duplex operation of the BS may be the SBFD operation described above when the DL subband and the UL subband are configured not to overlap, and may be the SSFD operation described above when the DL subband and the UL subband are configured to partially/completely overlap.

The first indication information may include only information on one of the start symbol/slot of the first time interval, the last symbol/slot of the first time interval, and the duration of the first time interval. In this case, it may be previously indicated to the UE or defined whether the first time interval is configured/indicated (only) within the DL time interval or configured/indicated (only) within the flexible time interval.

Here, the time resource period may be divided into the first time interval and the third time interval, which is a time interval remaining from the time resource period excluding the first time interval (and/or the first time interval and the second time interval). In this case, the BS may configure different transmission parameters for the UL signal between the first time interval and the third time interval. For example, the BS may configure different transmission power control parameters for the first time interval than for the third time interval. For example, the BS may configure/indicate the UE to a transmission power control parameter for the first time interval such that the transmission power of the UL signal for the first time interval may be determined to be a value greater than that for the third time interval. Alternatively, the BS may configure a different MCS for the first time interval than the MCS for the third time interval. Alternatively, the BS may expect that no DMRS bundled UL signals may be received during the third time interval and the first time interval.

Then, the BS may transmit the second indication information indicating/specifying a second time interval within the first time interval to the UE (S 165). The second time interval may be a time interval that is to be changed to a time interval for an HD operation (i.e., a time interval in which the BS performs a half-duplex operation) in the first time interval, as described with reference to FIG. 14. The BS may indicate/configure, to the UE, a second time interval changeable as a time interval for an HD operation of the BS in the first time interval and a fourth time interval fixed as a time interval for an SBFD operation of the BS through the second indication information. The second indication information may also indicate the second time interval (and/or the fourth time interval) through information on at least one of a start slot/symbol, a last slot/symbol, or a duration of the second time interval (and/or the fourth time interval).

Then, the BS may transmit downlink control information (DCI) including change indication information for the second time interval to the UE (S 167). Here, the change indication information may be information that indicates a change in the second time interval in which the full-duplex operation of the BS is performed to the HD time interval in which the half-duplex operation of the BS is performed. The BS may inform the UE through transmission of the DCI (e.g., DCI format 2.5) that the second time interval is changed from a time interval for a full-duplex operation of the BS to a time interval for a half-duplex operation of the BS. For example, when it is determined that interference with adjacent cells may occur significantly in the second time interval (e.g., when it is recognized that the UL time interval of the adjacent cell is configured in the second time interval), the BS needs to reduce the time interval during which a full-duplex operation is performed to reduce the interference. To this end, the BS may determine to perform the half-duplex operation in the second time interval, and may notify the UE through the DCI that the time interval has been changed to a time interval for the half-duplex operation of the BS. Even if the BS notifies through the DCI that the second time interval has been changed to a time interval for the half-duplex operation, the full-duplex operation may be performed in the fourth time interval. That is, the BS may change only some of the first time intervals into time intervals for the half-duplex operation through the second indication information.

As such, the proposed disclosure may effectively indicate to a UE a first time interval during which a full duplex operation of a BS is performed in a time resource period based on a TDD configuration, through first indication information about the first time interval during which the channel environment may be different in the time resource periods. It may be possible to dynamically change and designate the second time interval into a time interval for performing the half-duplex operation of the BS through downlink control information by separately pre-designating a second time interval, which may be changed from a first time interval designated as a time interval in which the full duplex operation of the BS is performed, to a time interval for performing the half-duplex operation of the BS. The DL control information only needs to include 1 bit of indication information on whether the second time interval is changed to a time interval for a half-duplex operation of the BS without information specifying the second time interval by pre-specifying the second time interval through RRC signaling, and thus the size of the DL control information may be minimized. When the BS is highly concerned about interference due to a performance interval of the full-duplex operation in relation to adjacent BSs or the like, the second time interval may be dynamically changed to the performance interval of the half-duplex operation of the BS, thereby effectively controlling interference that may occur due to the full-duplex operation time interval.

### Communication system example to which the present disclosure is applied

Although not limited thereto, various descriptions, functions, procedures, proposals, methods, and/or operational flow charts of the present disclosure disclosed in this document may be applied to various fields requiring wireless communication/connection (5G) between devices.

Hereinafter, it will be illustrated in more detail with reference to the drawings. In the following drawings/description, the same reference numerals may exemplify the same or corresponding hardware blocks, software blocks, or functional blocks, unless otherwise indicated.

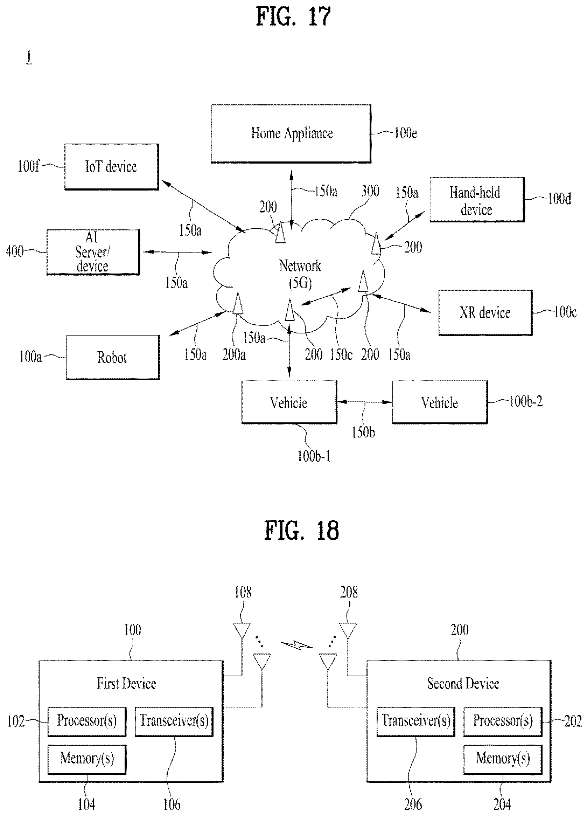

FIG. 17 illustrates a communication system applied to the present disclosure.

Referring to FIG. 17, a communication system 1 applied to the present disclosure includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g., Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/DL communication 150a, sidelink communication 150b (or, D2D communication), or inter BS communication (e.g., relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

### Examples of wireless devices to which the present disclosure is applied

FIG. 18 illustrates a wireless device applicable to the present disclosure.

Referring to FIG. 18, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 17.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information acquired by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

According to one example, the first wireless device 100 or UE may include a processor 102 and a memory 104 connected to the RF transceiver. The memory 104 may include at least one program capable of performing an operation related to the embodiments described with reference to FIGS. 11 to 15.

In detail, the processor 102 may control a radio frequency (RF) transceiver 106 to receive configuration information for a time resource period in which a DL time interval and a UL time interval are Time Division Duplexed (TDD), receive first indication information specifying a first time interval related to a full-duplex operation of the BS in the time resource period, receive second indication information specifying a second time interval changeable to a time interval related to a half-duplex operation of the BS in the first time interval and perform communication with a second wireless device 200 or a BS based on the TDD configuration information, the first indication information, and the second indication information.

Alternatively, the processor 102 and the memory 104 may be processing devices that control a UE that performs communication with a Bs. In this case, the processing device includes at least one processor, and at least one memory connected to the at least one processor and storing instructions to cause the UE, based on being executed by the at least one processor, to receive configuration information for a time resource period in which a DL time interval and a UL time interval are Time Division Duplexed (TDD), receive first indication information specifying a first time interval related to a full-duplex operation of the BS in the time resource period, receive second indication information specifying a second time interval changeable to a time interval related to a half-duplex operation of the BS in the first time interval, and perform communication with the BS based on the TDD configuration information, the first indication information, and the second indication information.

Alternatively, a non-transitory computer-readable storage medium having recorded thereon instructions for performing the proposed methods described with reference to FIGS. 11 to 15 may be configured.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information acquired by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

According to an embodiment, the BS or a network may include a processor 202, a memory 204, and/or a transceiver 206. The processor 202 may control the transceiver 206 and an RF transceiver 206 to transmit, to the UE, configuration information for a time resource period in which a DL time interval and a UL time interval are Time Division Duplexed (TDD), transmit, to the UE, first indication information specifying a first time interval related to a full-duplex operation of the BS in the time resource period, transmit, to the UE, second indication information specifying a second time interval changeable to a time interval related to a half-duplex operation of the BS in the first time interval, and perform communication with a second wireless device 100 or a UE based on the TDD configuration information, the first indication information, and the second indication information.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

### Examples of application of wireless devices to which the present disclosure is applied

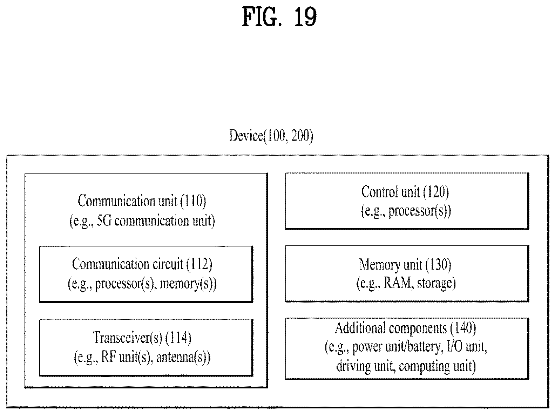

FIG. 19 illustrates another example of a wireless device applied to the present disclosure.

Referring to FIG. 19, wireless devices 100 and 200 may correspond to the wireless devices 100 and 200 of FIG. 18 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 18. For example, the transceiver(s) 114 may include the one or more transceivers 106 and 206 and/or the one or more antennas 108 and 208 of FIG. 18. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 17), the vehicles (100b-1 and 100b-2 of FIG. 17), the XR device (100c of FIG. 17), the hand-held device (100d of FIG. 17), the home appliance (100e of FIG. 17), the IoT device (100f of FIG. 17), a digital broadcast terminal, a hologram device, a public safety device, an MTC device, a medicine device, a fintech device (or a finance device), a security device, a climate/environment device, the AI server/device (400 of FIG. 17), the BSs (200 of FIG. 17), a network node, etc. The wireless device may be used in a mobile or fixed place according to a use-example/service.

In FIG. 19, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Here, wireless communication technologies implemented in the wireless devices (XXX, YYY) of the present specification may include LTE, NR, and 6G, as well as Narrowband Internet of Things for low power communication. At this time, for example, the NB-IoT technology may be an example of a Low Power Wide Area Network (LPWAN) technology, and may be implemented in standards such as LTE Cat NB1 and/or LTE Cat NB2, and is not limited to the above-described names. Additionally or alternatively, the wireless communication technology implemented in the wireless devices (XXX, YYY) of the present specification may perform communication based on LTE-M technology. In this case, as an example, the LTE-M technology may be an example of LPWAN technology, and may be referred to by various names such as eMTC (enhanced machine type communication). For example, LTE-M technology may be implemented in at least one of a variety of standards, such as 1) LTE CAT 0, 2) LTE Cat M1, 3) LTE Cat M2, 4) LTE non-BL (non-Bandwidth Limited), 5) LTE-MTC, 6) LTE Machine Type Communication, and/or 7) LTE M, and is not limited to the above-described names. Additionally or alternatively, the wireless communication technology implemented in the wireless devices (XXX, YYY) of the present specification is at least one of ZigBee, Bluetooth, and Low Power Wide Area Network (LPWAN) considering low power communication, and is not limited to the above-described names. As an example, ZigBee technology may generate personal area networks (PANs) related to small/low-power digital communication based on various standards such as IEEE 802.15.4, and may be called various names.

The embodiments described above are those in which components and features of the present disclosure are combined in a predetermined form. Each component or feature should be considered optional unless explicitly stated otherwise. Each component or feature may be implemented in a form that is not combined with other components or features. In addition, it is also possible to constitute an embodiment of the present disclosure by combining some components and/or features. The order of operations described in the embodiments of the present disclosure may be changed. Some configurations or features of one embodiment may be included in other embodiments, or may be replaced with corresponding configurations or features of other embodiments. It is obvious that the embodiments may be configured by combining claims that do not have an explicit citation relationship in the claims or may be included as new claims by amendment after filing.

In this document, embodiments of the present disclosure have been mainly described based on a signal transmission/reception relationship between a terminal and a base station. Such a transmission/reception relationship is extended in the same/similar manner to signal transmission/reception between a terminal and a relay or a base station and a relay. A specific operation described as being performed by a base station in this document may be performed by its upper node in some cases. That is, it is obvious that various operations performed for communication with a terminal in a network comprising a plurality of network nodes including a base station may be performed by the base station or network nodes other than the base station. The base station may be replaced by terms such as a fixed station, a Node B, an eNode B (eNB), an access point, and the like. In addition, the terminal may be replaced with terms such as User Equipment (UE), Mobile Station (MS), Mobile Subscriber Station (MSS).

In a hardware configuration, the embodiments of the present disclosure may be achieved by one or more application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, etc.

In a firmware or software configuration, a method according to embodiments of the present disclosure may be implemented in the form of a module, a procedure, a function, etc. Software code may be stored in a memory unit and executed by a processor. The memory unit is located at the interior or exterior of the processor and may transmit and receive data to and from the processor via various known means

As described before, a detailed description has been given of preferred embodiments of the present disclosure so that those skilled in the art may implement and perform the present disclosure. While reference has been made above to the preferred embodiments of the present disclosure, those skilled in the art will understand that various modifications and alterations may be made to the present disclosure within the scope of the present disclosure.

### INDUSTRIAL APPLICABILITY

The embodiments of the present disclosure as described above may be applied to various mobile communication systems.

## Claims

1. A method of performing communication with a base station (BS) by a user equipment (UE) in a wireless communication system, the method comprising:
receiving time division duplexing (TDD) configuration information for configuring a downlink (DL) time interval and an uplink (UL) time interval within a time resource period;
receiving first indication information specifying a first time interval related to a full-duplex operation of the BS in the time resource period;
receiving second indication information specifying a second time interval in the first time interval; and
performing communication with the BS based on the TDD configuration information, the first indication information, and the second indication information,
wherein the second time interval is a time interval changeable in a time interval related to a half-duplex operation of the BS in the first time interval.

2. The method of claim 1, wherein the second time interval is changed from a time interval related to a full-duplex operation of the BS to a time interval related to a half-duplex operation of the BS based on reception of downlink control information (DCI).

3. The method of claim 2, wherein a remaining time interval excluding the second time interval from the first time interval is a time interval fixed as a time interval for a full-duplex operation of the BS regardless of reception of the DCI.

4. The method of claim 1, wherein the first time interval is specified within the time resource period based on information of a start time resource and information of a last time resource, which are provided in the first indication information.

5. The method of claim 1, wherein the first time interval is specified within the time resource period based on information of a start time resource and duration information, which are provided in the first indication information.

6. The method of claim 1, wherein the first time interval is specified only within the DL time interval based on the first indication information.

7. The method of claim 1, wherein a frequency band for the first time interval includes a first subband for the UL and a second subband for the DL that do not overlap each other.

8. The method of claim 1, wherein a frequency band for the first time interval includes a first subband for the UL and a second subband for the DL that overlap each other.

9. The method of claim 1, wherein the time resource period is divided into the first time interval and a third time interval excluding the first time interval based on the first indication information, andthe first time interval is configured with a different transmission power control parameter than the third time interval.

10. The method of claim 1, wherein the first indication information and the second indication information are received from the BS through radio resource control (RRC) signaling.

11. A non-transitory computer-readable storage medium having recorded thereon instructions for performing the method of claim 1.

12. A user equipment (UE) for performing communication with a base station (BS) in a wireless communication system, the UE comprising:
a radio frequency (RF) transceiver; and
a processor connected to the RF transceiver,
wherein the processor is configured to control the RF transceiver to receive time division duplexing (TDD) configuration information for configuring a downlink (DL) time interval and an uplink (UL) time interval within a time resource period, receive first indication information specifying a first time interval related to a full-duplex operation of the BS in the time resource period, receive second indication information specifying a second time interval in the first time interval, and perform communication with the BS based on the TDD configuration information, the first indication information, and the second indication information, and
the second time interval is a time interval changeable in a time interval related to a half-duplex operation of the BS in the first time interval.

13. A processing device for controlling a user equipment (UE) performing communication with a base station (BS) in a wireless communication system, the processing device comprising:
at least one processor; and
at least one memory connected to the at least one processor and storing instructions to cause the UE, based on being executed by the at least one processor, to receive time division duplexing (TDD) configuration information for configuring a downlink (DL) time interval and an uplink (UL) time interval within a time resource period, receive first indication information specifying a first time interval related to a full-duplex operation of the BS in the time resource period, receive second indication information specifying a second time interval in the first time interval, and perform communication with the BS based on the TDD configuration information, the first indication information, and the second indication information,
wherein the second time interval is a time interval changeable in a time interval related to a half-duplex operation of the BS in the first time interval.

14. A method of performing communication with a user equipment (UE) by a base station (BS) in a wireless communication system, the method comprising:
transmitting, to the UE, time division duplexing (TDD) configuration information for configuring a downlink (DL) time interval and an uplink (UL) time interval within a time resource period;
transmitting, to the UE, first indication information specifying a first time interval related to a full-duplex operation of the BS in the time resource period;
transmitting, to the UE, second indication information specifying a second time interval in the first time interval; and
performing communication with the UE based on the TDD configuration information, the first indication information, and the second indication information,
wherein the second time interval is a time interval changeable in a time interval related to a half-duplex operation of the BS in the first time interval.

15. A base station (BS) for performing communication with a user equipment (UE) in a wireless communication system, the BS comprising:
a radio frequency (RF) transceiver; and
a processor connected to the RF transceiver,
wherein the processor is configured to control the RF transceiver to transmit, to the UE, time division duplexing (TDD) configuration information for configuring a downlink (DL) time interval and an uplink (UL) time interval within a time resource period, transmit, to the UE, first indication information specifying a first time interval related to a full-duplex operation of the BS in the time resource period, transmit, to the UE, second indication information specifying a second time interval in the first time interval, and perform communication with the UE based on the TDD configuration information, the first indication information, and the second indication information, and
the second time interval is a time interval changeable in a time interval related to a half-duplex operation of the BS in the first time interval.
